# EUROPEAN PATENT APPLICATION

(11) **EP 1 609 514 A1**
(43) Date of publication of application: **28.12.2005**
(21) Application number: 05013388.3
(22) Date of filing: 21.06.2005
(51) Int. Cl.: A63F 13/12, A63F 13/10

(54) **Game system, and server**

(30) Priority: 25.06.2004 JP 2004188822; 28.07.2004 JP 2004220486
(71) Applicant: Aruze Corp., Tokyo (JP)
(72) Inventor: Kobayashi, Takahiko, Tokyo 135-0063 (JP); Kogo, Junichi, Tokyo 135-0063 (JP); Hiranoya, Nobukatsu, Tokyo 135-0063 (JP); Hayashi, Kentaro, Tokyo 135-0063 (JP); Fujimori, Kenichi, Tokyo 135-0063 (JP)
(74) Representative: Grünecker, Kinkeldey, Stockmair & Schwanhäusser Anwaltssozietät

(57) **Abstract**

The game system is capable of executing a game using read objects such as a card, an action figure, and the like. In the game system, the identifying information owned by a read object, for example, a card, an action figure, and the like, itself does not change, a game result of the game performed by using the read object is storedas specific data, for example, historical data showing the history of the game, and the like, and next, on the occasion of executing the game, based on the character specific data, character information is decided, and therefore, according as the game is proceeded, the character information corresponding to the read object changes.

## Description

The present disclosure relates to subject matters contained in Japanese Patent Application No. 2004-188822 filed on June 25, 2004, Japanese Patent Application No. 2004-220486 filed on July 28, 2004, which are expressly incorporated herein by reference in its entireties.

### BACKGROUND OF THE INVENTION

### 1. Field of the Invention

The present invention relates to, for example, a game system capable of executing a game using read objects such as a card, an action figure, and the like, and a server constituting the game system.

### 2. Description of the Prior Art

Heretofore, in general, a card such as a trading card and the like used to be a card in which an athlete, an animated character, and the like are portrayed, and collected by maniac. In recent years, however, a card game executed by using such a card has been provided and gaining a steady support from a wide range of age groups. A popularity factor of such a card game can be said to lie in the fact that the card game has bilateral character of collection element of collecting the cards and fascinating aspect as a game.

Further, in so-called game centers and the like, there has appeared a game system, in which data is read from a card having data relative to characters appearing on the game, and based on this data, a video game is allowed to proceed, and thus it has come to be widely popularized. As such a game system, for example, in Japanese Patent Laid-Open Publication No. 2002-301264, a game system has been disclosed, in which data are read from a plurality of cards lined up on the arrangement panel of terminal, and based on these data, a video game such as a succor game and the like is allowed to proceed. In this game system, the cards corresponding to the athletes are collected so as to make a team, thereby fighting a battle with the other team. Even if skilled in the game, though the ability of the athlete corresponding to the card does not grows, through the collection of the card corresponding to the athlete having much higher ability, the team can be strengthened. Consequently, through the association with the game content, collection desire of a player for the card can be aroused.

Further, in general, in the card game, since the surface of the card is printed with the ability value of the character together with the external appearance of the character, even if skilled in the game, the ability value of the character does not change.

According to the game system of Patent Document 1, even if skilled in the game, since the ability value of the character corresponding to the card cannot be raised and an individual character corresponding to an individual card is fixed, a collecting desire of the player for the card such as collecting the card corresponding to the character having much higher ability can be aroused. However, even if skilled in the game by using the card to play a game, the result is not reflected on the ability value of the character corresponding to the card, and therefore, there has been a problem in that, even in case the card is reflected in the game, the game result is not reflected on the card, and the game itself ends up becoming like one way traffic, thereby making it difficult to expand the width of the fascinating aspect of the game.

Further, even in the card game using the card printed with the ability value of the character, since the strength of the card is not changed, there is a problem in that it lacks the fascinating aspect. Heretofore, as the card game, there has been a MENKO game. However, the MENKO, other than its collection property, has been provided with an amusement to strengthen the MENKO itself by soaking it in oil, and both the collection property and the fascinating aspect of the game itself have been compatible. Even in the video game executed by using the card, it is necessary to make both the collection property and the fascinating aspect of the game itself compatible.

### SUMMARY OF THE INVENTION

The present invention has been carried out in view of the above described problems, and an object of the invention is to provide a game system allowing both the collection property of the game using an read obj ect (for example, a card, an action figure, and the like) and the fascinating aspect of the game itself to be compatible, a server constituting the game system, and a game control program executed by the server.

### [Problems to be Solved by the Invention]

To solve the above described problems, the present invention provides the following.
(1) A game system capable of executing a game using read objects portraying characters appearing on the game, each object having a piece of specific identifying information, comprising:
   a specific data storage unit for storing character specific data of said characters for each character, each character specific data being associated with said identifying information;
   a character specific data setting unit for setting each character specific data based on a game result, and storing the character specific data in said character specific data storage unit;
   a reading unit for reading the identifying information from said read object;
   an acquiring unit for acquiring player identifying information for specifying a player;
   an extracting unit for extracting the character specific data of the character corresponding to the read object from said character specific data storage unit based on the player identifying information acquired by said acquiring unit and the identifying information read by said reading unit;
   a character information deciding unit for deciding the character information used in the game based on the character specific data extracted by said extracting unit; and
   a game control unit for proceeding said game by using the character information decided by said character information deciding unit.

   According to the invention of (1), while the data (identifying information) owned by a read object (for example, a card, an action figure, and the like) itself does not change, a game result of the game performed by using the read object is stored as specific data (for example, historical data showing the history of the game, and the like), and next, on the occasion of executing the game, based on the character specific data, character information is decided, and therefore, according as the game is proceeded, the character information corresponding to the read object changes.
   In this manner, by separating the nature owned by the read object itself from the ability and the external appearance of the character corresponding to the read object, and while fixing the nature owned by the read object itself, by changing the ability and the external appearance of the character corresponding to the read object within the game according to the character specific data, the collection property of the game using the read object and the fascinating aspect of the game itself can be made compatible.
   Further, based on not only identifying information read from the read object by reading means, but also player identifying information acquired by acquiring means, the character specific data is extracted from character specific data storage means, and based on the character specific data, character information used in the game is decided, and therefore, for example, even when the read object used by a player A in the game is used by a player other than the player A, the same character information as the character information decided when the player A uses the read obj ect is not decided. That is, the read object cannot be used in the same state as the player A. Consequently, for example, a faulty play and the like of robbing the read object from the skilled player of the game and using it in the same state as the skilled player so as to advantageously proceed the game can be prevented.
   It should be noted that, in the present invention, as the character information, for example, external appearance structure information and the like relative to the ability value of the character, and the external appearance structure of the character can be cited.
   Further, the present invention provides the following.
(2) A game system capable of executing a game using read objects portraying characters appearing on the game, each object having a piece of specific identifying information, comprising:
   a character specific data storage unit for storing the character specific data defined on each character in association with said identifying information for each character;
   a character specific data setting unit for setting each character specific data based on a game result and storing it into said character specific data storage unit;
   a reading unit for reading the specific identifying information of the read object from said read object;
   an extracting unit for extracting the character specific data of the character corresponding to the read object from said character specific data storage unit based on the identifying information read by said reading unit;
   an ability value deciding unit for deciding the ability value of the character based on the character specific data extracted by said extracting unit; and
   a game control unit for proceeding said game by using the ability value decided by said ability value deciding unit.

   According to the invention of (2), while the data (identifying information) owned by a read obj ect (for example, a card, an action figure, and the like) itself does not change, a game result of the game performed by using the read object is stored as the character specific data (for example, historical data showing the history of the game, and the like), and next, on the occasion of executing the game, based on the character specific data, the ability value of the character is decided, and therefore, according as the skill in the game is acquired, the ability value of the character corresponding to the read object changes.
   In this manner, by separating the nature owned by the read object itself from the ability of the character corresponding to the read object, and while fixing the nature owned by the read object itself, by changing the ability and the external appearance of the character corresponding to the read object within the game according to the character specific data, the collection property of the game using the read obj ect and the fascinating aspect of the game itself can be made compatible.
   Further, the present invention provides the following.
(3) A server connected to at least one set of terminal through a communication line, said server constituting a game system allowing a player to execute a game using read objects by using said terminal, said read objects portraying the characters appearing on the game, and each read object having a piece of specific identifying information, comprising:
   a character specific data storage unit for storing each character specific data in association with said corresponding identifying information;
   a character specific data setting unit for setting the character specific data based on a game result, and storing it into said character specific data storage unit;
   an extracting unit for extracting the character specific data of the character corresponding to the read object from said character specific data storage unit based on the identifying information read from said read object by the reading unit provided in each terminal;
   an ability value deciding unit for deciding the ability value of the character based on the character specific data extracted by said extracting unit; and
   a game control unit for proceeding said game by using the ability value decided by said ability value deciding unit.

   According to the invention of (3), while the data (identifying information) owned by a read obj ect (for example, a card, an action figure, and the like) itself does not change, a game result of the game performed by using the read object is stored as character specific data (for example, historical data showing the history of the game, and the like), and next, on the occasion of executing the game, based on the character specific data, the ability value of the character is decided, and therefore, according as the skill in the game is acquired, the ability value of the character corresponding to the read object changes.
   In this manner, through the separation of the nature owned by the read object itself from the ability of the character corresponding to the read object, and while fixing the nature owned by the read object itself, through the change of the ability of the character corresponding to the read object within the game according to the character specific data, the collection ability of the game using the read object and the fascinating aspect of the game itself can be made compatible.
   Further, the present invention provides the following.
(4) A program product including a server being connected to at least one set of terminal through a communication line, constituting a game system allowing a player to execute a game using read objects by using said terminal, said read objects portraying the characters appearing on the game, and each read object having a piece of specific identifying information, comprising the steps of:
   storing each character specific data in association with said corresponding identifying information;
   setting the character specific data based on a game result, and storing the character specific data into a character specific data storage unit;
   extracting the character specific data of the character corresponding to the read object from said character specific data storage unit based on the identifying information read from said read object by the reading unit provided in each terminal;
   deciding the ability value of the character based on the character specific data extracted at said extracting step; and
   proceeding said game by using the ability value decided at deciding step.

According to the invention of (4), while the data (identifying information) owned by a read obj ect (for example, a card, an action figure, and the like) itself does not change, a game result of the game performed by using the read object is stored as character specific data (for example, historical data showing the history of the game, and the like), and next, on the occasion of executing the game, based on the character specific data, the ability value of the character is decided, and therefore, according as the skill in the game is acquired, the ability value of the character corresponding to the read object changes.

In this manner, by separating the nature owned by the read object itself from the ability of the character corresponding to the read object, and while fixing the nature owned by the read object itself, by changing the ability and the external appearance of the character corresponding to the read object within the game according to the character specific data, the collection property of the game using the read obj ect and the fascinating aspect of the game itself can be made compatible.

According to the present invention, the collection property of the game using the read object (for example, a card, an action figure, and the like and the fascinating aspect of the game itself can be made compatible.

Additional objects and advantages of the invention will be set forth in the description which follows, and in part will be obvious from the description, or may be learned by practice of the invention. The objects and advantages of the invention may be realized and obtained by means of the instrumentalities and combination particularly pointed out hereinafter.

### BRIEF DESCRIPTION OF THE DRAWINGS

Fig. 1 is a structural drawing of a game system according to the present invention;
Fig. 2 is an oblique view showing external appearance showing eight sets of terminal and card vending machines installed in one outlet;
Fig. 3 is an oblique view showing the external appearance of the terminal;
Fig. 4 is a block diagram showing a hardware structure of the terminal;
Fig. 5 is a block diagram showing a hardware structure of the outlet server;
Fig. 6 is a block diagram showing a hardware structure of a center server;
Fig. 7 is a view showing one example of a game image displayed in a first display of the terminal;
Fig. 8 is a view for explaining each image included in the game image shown in Fig. 7;
Fig. 9 is a view showing an object position table;
Fig. 10 is a flowchart showing the subroutine of an instruction input processing executed in the terminal;
Fig. 11 is a flowchart showing the subroutine of an operation type determination processing called and executed in step S14 of the sub-routing shown in Fig. 10;
Fig. 12 is a view showing a processing content determine table referred to in step S36 of the subroutine show in Fig. 11;
Fig. 13 is a view showing player participation information;
Fig. 14 is a view for explaining the content of transmitting and receiving processing of the data by the outlet server;
Fig. 15 is a flowchart showing the flow of the processing until starting the game in the terminal 1, the outlet server 2 and the center server 3;
Fig. 16 is a flowchart showing the subroutine of the initial setting processing called and executed by the outlet server 2 in step S200 in the flowchart shown in Fig. 15;
Fig. 17 is a view showing a support card determine table;
Fig. 18 is a view showing one example of historical data;
Fig. 19 is a view showing one example of an ability value setting table;
Fig. 20 is a view showing one example of player information;
Fig. 21 is a flowchart showing the outline of the processing executed in the terminal 1;
Fig. 22 is a flowchart showing the outline of the processing executed in the outlet server 2;
Fig. 23 is a time chart for explaining the processing of step S237 of the flowchart shown in Fig. 22;
Fig. 24 is a view showing a play field image 91 displayed in a first display 11 of the terminal 1 during the game;
Fig. 25 is a flowchart showing the subroutine of a command processing called and executed in step S232 of the flowchart shown in Fig. 22:
Fig. 26 is a flowchart showing the subroutine of a fighting processing called and executed in step S255 of the flowchart shown in Fig. 25:
Fig. 27 is a view showing one example of an ability value correction table;
Fig. 28 (A) is player information before the ability value correction, and Figs. 28(B) to 28(D) are player information after the ability value correction;
Fig. 29 is a view showing a game image displayed in the first display 11 of the terminal 1 and the fighting image displayed in a second display 12;
Fig. 30 is a view showing one example of a recovery timer setting table;
Fig. 31 is a structural drawing of another example of the game system according to the present invention;
Fig 32 is an oblique view showing the external appearance of the terminal according to another example of the game system; and
Fig. 33 is a view showing the external appearance of a read object (action figure) according to another example of the game system.

The accompanying drawings, which are incorporated in and constitute a part of the specification, illustrate embodiments of the invention, and together with the general description given above and the detailed description of the embodiments given below, serve to explain the principles of the invention.

### DESCRIPTION OF THE PREFERRED EMBODIMENTS

Embodiments according to the present invention will be described below in detail with reference to the drawings.

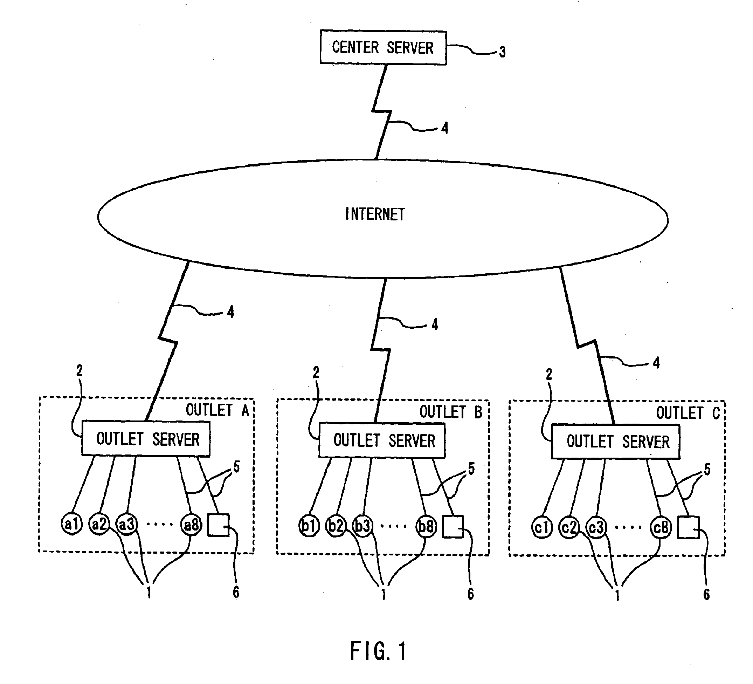

Fig. 1 is a structural drawing of a game system according to the present invention.

The game system comprises: a plurality of terminal 1; an outlet server 2 communicatably connected to a plurality (eight sets here) of terminal 1 through a private line 5; and a center server 3 communicatably connected to a plurality of outlet servers 2 through a communication line 4 and managing the game performed by using the terminal 1 by a plurality of players, and moreover, comprises a card vending machine 6 connected to the outlet server 2 through the private line 5 one set each for every outlet. Incidentally, between the outlet servers 2 also, communications are possible through the communication line 4.

The terminal 1 accepts a predetermined operation performed through a touch panel 14 (not shown) by a player, and at the same time, allows a game to proceed based on data transmitted from the outlet server 2 (or center server 3) or data and the like from other terminal 1.

Incidentally, the terminal 1 is associated with machine IDs specific to itself, respectively. The machine ID includes a code for each outlet server 2 connected with the terminal 1 and a code for each terminal 1 within the outlet where the terminal 1 is installed. For example, in case the code of the outlet server A of the outlet A is A, and the code of the terminal 1 within the outlet A is 1, the machine ID of this terminal 1 is a1.

The outlet server 2 is communicatably connected to a plurality (eight sets here) of terminal 1 and the center server 3, respectively, and data transmission and reception is performed between the terminal 1 and the center server 3.

The center server 3 is communicatably connected to a plurality of outlet servers 2, and has a historical data relative to each player. The historical data relative to the player includes character specific data peculiar to each character operated by the player.

The center server 3 performs the transmission and reception of the data with the terminal 1 through the outlet server 2. In this manner, the player who performs the game in the same play field is decided. Incidentally, in this game system, the maximum up to four persons can play a game in the same play field.

The card vending machine 6 is communicatable with the center server 3 through the outlet server 2. The card vending machine 6 accepts the input operation of personal information performed by the player, and performs the issuance of an ID card 8 (not shown). By the personal information inputted at this time, the center server 3 is registered with the player, and by the center server 3, an identifiable ID data of the player for each player is granted. An ID card 8 to be issued is stored with this ID data.

The ID data stored in the ID data 8 is equivalent to the player identifying information in the present invention.

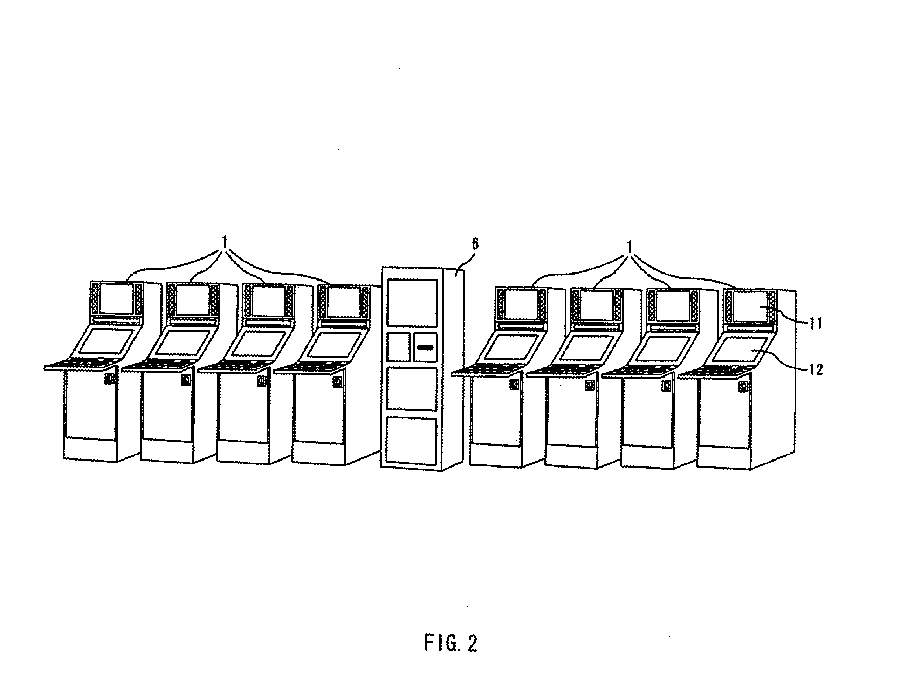

Fig. 2 is an oblique view showing the external appearance of eight sets of the terminal and the card vending machine installed in one outlet.

Incidentally, in the following description, as one example of the terminal, while a commercial game device comprising two displays (first display 11 and second display 12) will be described, the present invention is not particularly limited to this example, and it can be similarly adapted to a home vide game device constituted by connecting the home video game device to a home television receiver, a personal computer functioning as the video game device by executing a video program, and the like.

Further, in the present embodiment, the game performed by using the terminal 1 is a RTS (real time strategy game) using the card, which is such that a player operating the terminal 1, and a player operating another terminal or a CPU player dispose characters on a play field existing on a simulative game space and operate the characters to fight against each other. This game uses a character card corresponding to the character, and a support card affecting the game content or the character.

The character card is a card actually owned by the player, and has individual identifying information. The character card in the present embodiment is equivalent to the read obj ect in the present invention.

Each character card corresponds to any one of the characters among 108 types of characters appearing on the game. This character card, for example, is sold by the card vending machine 6 and the like.

The character card in the present embodiment can use, for example, a card comprising a magnetic stripe, an IC card, and the like. Further, in case the IC card is used as the character card, the IC card may be of a contact type or a non-contact type. As the IC card of the non-contact type, for example, a transponder and the like used in a RFID (Radio Frequency Identification) system can be cited. Incidentally, since this technique is a conventionally known technique, and is described in Japanese Patent Laid-Open Publication No. 8-21875, the description thereof will be omitted here. Further, in the present invention, it is possible to use the character card formed with a pattern on the surface according to the identifying information optically identifiable. Hereinafter, a description will be made assuming that the character card is a non-contact IC card.

Incidentally, the read object in the present invention, if it is a matter physically existing, that is, a corporeal matter, it is not limited to this example, and for example, a card printed on the surface with a pattern showing the identifying information by special coating material absorbing or reflecting invisible light beams (infrared rays and the like), the action figure built-in with the IC chip, and the like can be adopted. Such action figure will be described later in detail by using the drawing.

In case the card printed on the surface with a pattern showing the identifying information by special coating material which absorbs or reflects invisible light beams is used as the read object, the terminal 1 is installed with a light source for emitting the invisible light beams and an image sensor for receiving the invisible light beams. The invisible light beams emitted from the light source is absorbed or reflected on the surface according to the pattern showing the identifying information printed on the surface of the card by special coating material, and are received by the image sensor. As a result, the identifying information printed on the surface of the card can be read. In this case, the image sensor functions as reading means.

The support card is a card, which exists as data and is displayed as an image in a display (first display 11). The support card includes, for example, a defensive system support card, a move system support card, an attack system support card, a recovery system support card, and the like, and is distributed 25 sheets each to each player at the game starting time.

The support card has a function of giving a predetermined effect to the character or the game content while in use during the game. Specifically, the protection system support card is a card having functions to raise the defensive power and the attack evade rate, and the like of the ally, and to lower the attack power, the attack hitting probability, the probability of giving an additional damage (hereinafter referred to as critical hitting probability) and the like of the enemy. The move system support card is a card having functions to raise locomotive faculty of the ally character, and to lower locomotive faculty of the enemy character. The attack system support card is a card having functions to raise the attack power, the attack hitting probability, and the critical hitting probability, and the like of the ally, and to lower the defensive power, the attack evade rate, and the like of the enemy. The recovery system support card is a card having a function to recover damage suffered by the ally character and exhausted action points (for example, a magic power, a skill point, and the like).

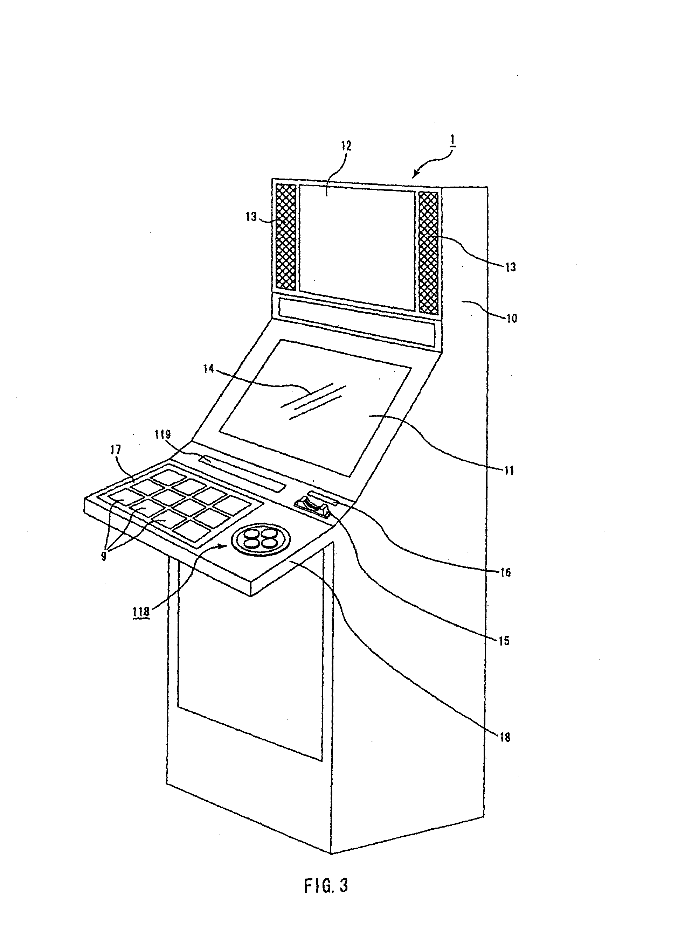

As shown in Fig. 3, the terminal 1 comprises: a cabinet 10; a first display 11 provided in the front of the cabinet 10 to be slanted at a predetermined angle; and a second display 12 provided above the first display 11.

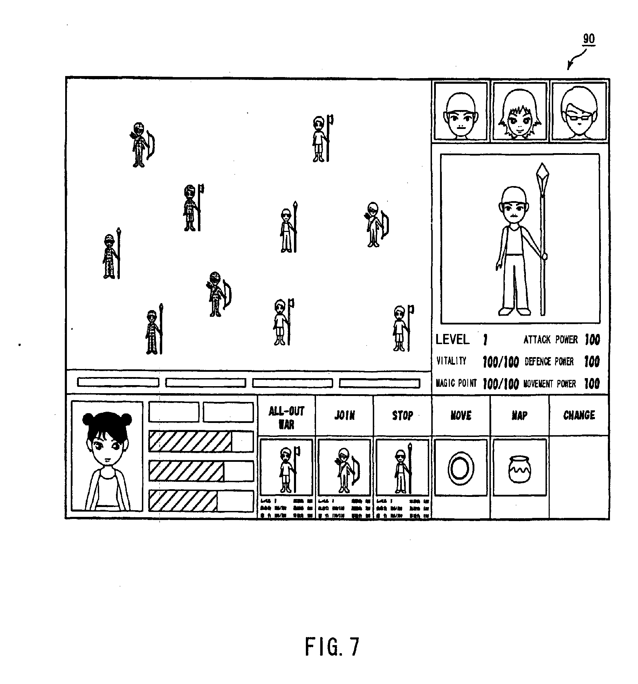

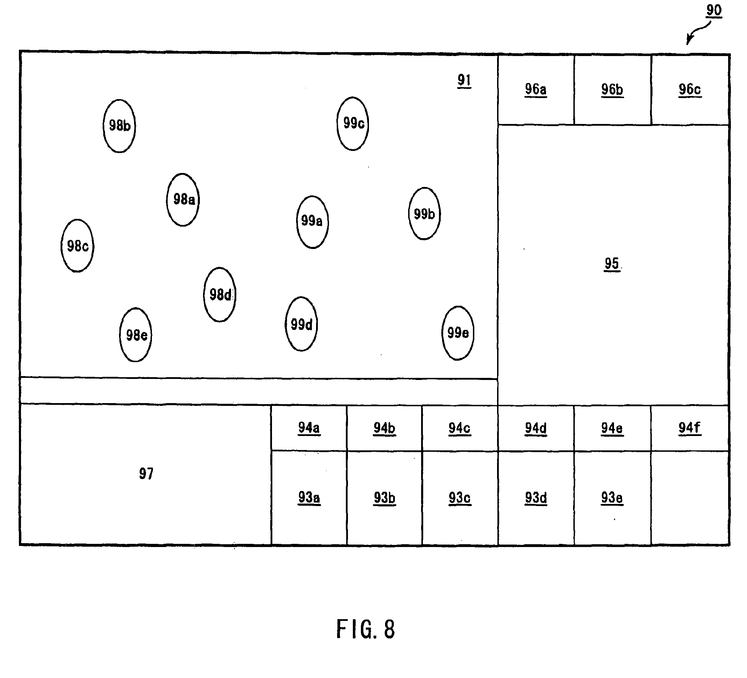

The first display 11 is displayed with a game image including a play field image showing a play field disposed with characters and card images (see Figs. 7 and 8).

The second display 12 is displayed with a fighting image showing the fighting state when the fighting between the characters is performed.

In front of the first display 11, a touch panel 14 is provided. The touch panel 14 can detect a touch by the player, and outputs a detection signal showing a touched position when detecting the touch to an operation input portion 114 (not shown) to be described later. The player can input various types of instructions by touching the touch panel 14. Both the left and right sides of the second display panel 12 are provided with a speaker 13, which outputs sounds.

Below the first display 11, there are provided a seven segment indicator 119, a coin insertion slot 15 inputted with a coin, and an ID card loading slot 16 to be inserted with an ID card. The seven segment indicator 119 is displayed with arrangement points. The arrangement points are set for each player, and when character cards 9 are mounted on a mounting panel 17 to be described later, the arrangement points are reduced by the points set in advance for each character card 9.

In case the arrangement points are reduced to 0 point, no more new character card can be mounted on the mounting panel 17 to be used for the game. The coin inputted to the coin insertion slot 15 is detected by a coin sensor 115 (not shown) . Further, the ID card loaded into the ID card loading slot 16 has its ID data read by an ID card reader 116 (not shown). The ID data reader 116 functions as acquiring means for acquiring the ID data as player identifying information.

The cabinet 10 is provided with an control board 18 protruding in front, and on the upper surface of the control board 18, there is provided the mounting panel 17 which can be mounted with a plurality of character cards 9.

Inside the control board 18, there is provided a character card reader 117 (not shown), and the character card reader 17 can read identifying information from the character cards 9 mounted on the mounting panel 17.

The character card reader 117 functions as reading means for reading identifying information from the character cards 9.

Further, on the upper surface of the control board 18, there are provided a plurality of operating switches 118. The player can operate the operating switches 118 to input predetermined instructions.

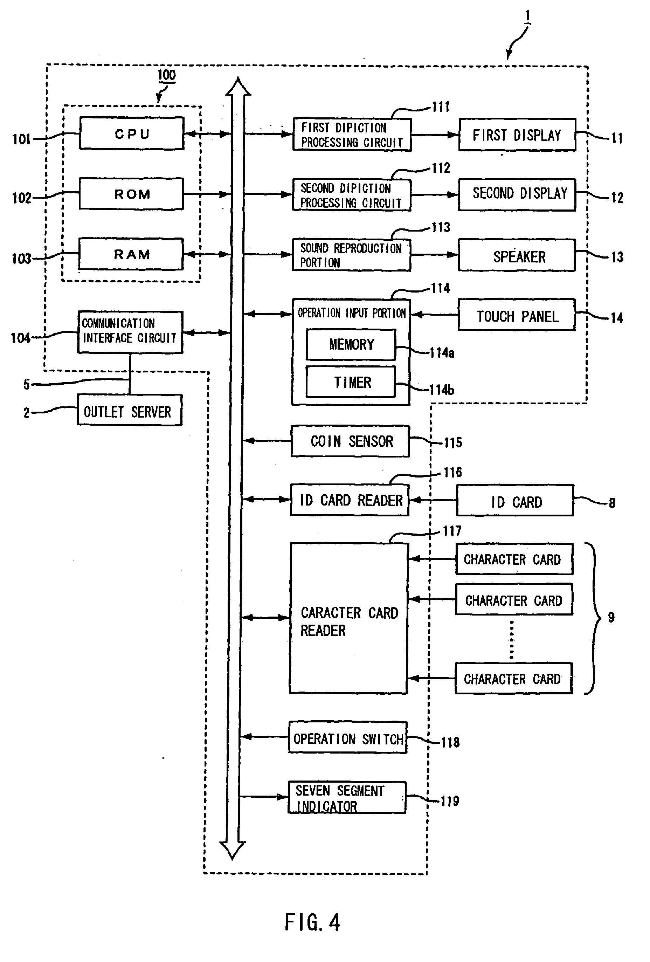

Fig. 4 is a block diagram showing a hardware structure of the terminal.

A control portion 100 controls the whole operation of the terminal 1, and comprises a CPU 101, a ROM 102, and a RAM 103.

The ROM 102 stores various types of image data and game programs, and the like.

That is, the ROM 102 stores, for example, image data representing various types of images constituting the game images displayed in the first display 11 such as an ally character image showing a character operable by a player, an enemy character image operated by the player who is a fighting partner, a play field image disposed with the ally character image and the enemy character image, a button image representing a button which accepts a predetermined instruction, a character card image representing the character card, a support card image representing the support card, and a character image representing a character corresponding to the character card and the like.

Further, the ROM 102 stores, for example, an object constituting the ally character, an object constituting the enemy character, a texture data, and a background image, and the like. The object and the like constituting the ally character or the enemy character are constituted by a predetermined number of polygons so as to be able to depict three-dimensional images.

The ROM 102 maybe a storage mediumbuilt-into the terminal 1 or a detachably attachable storage medium. Further, the ROM 102 may be constituted by both of the medium.

Further, among various data stored in the ROM 102, the data which can be stored in the detachably attachable recording medium may be made readable by driver, for example, such as, a hard disc drive, an optical disc drive, a flexible disc drive, a silicon disc drive, a cassette medium reading machine, and the like. In this case, the recording medium is, for example, a hard disc, an optical disc, a flexible disc, CD, DVD, a semiconductor memory, and the like.

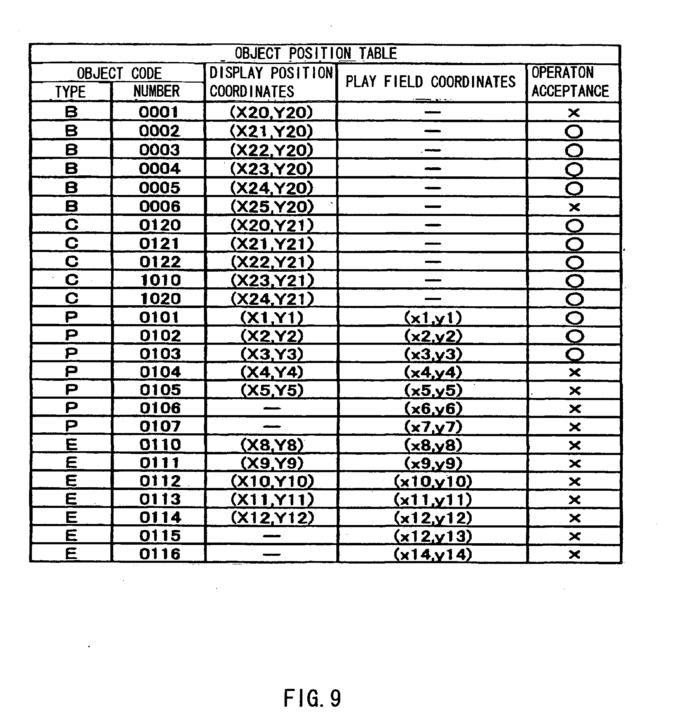

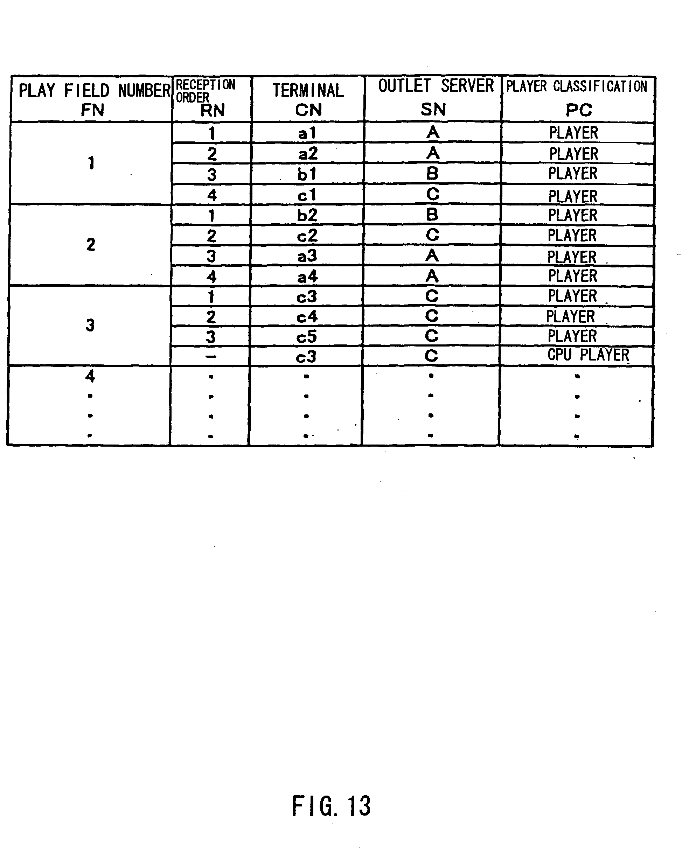

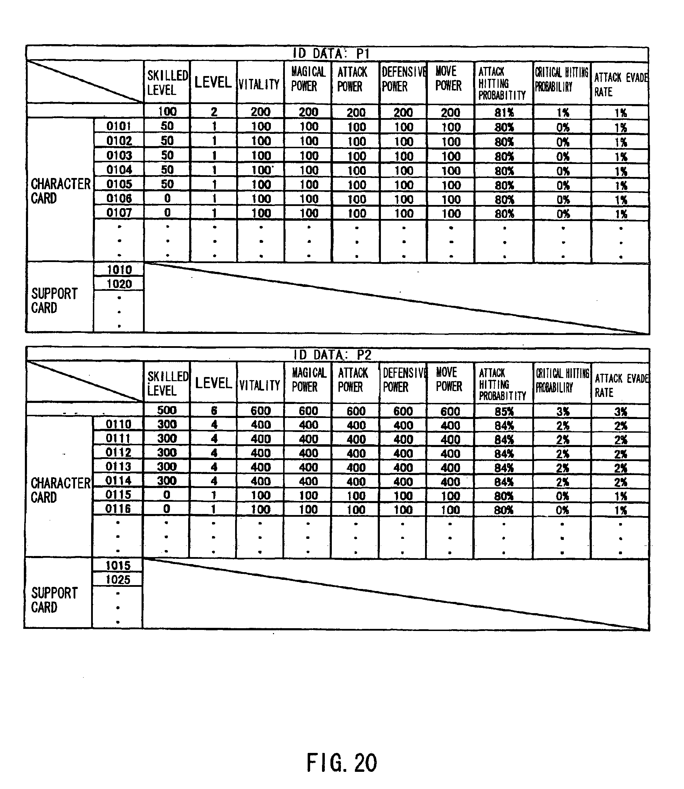

The RAM 103 temporarily stores information in process, variables, and the like. For example, it stores object position information (see Fig. 9), player participation information (see Fig. 13), player information (see Fig. 20), and the like. The obj ect position information is a data stored in the object position table shown in Fig. 9, which includes display position coordinates of the image displayed in the first display 11, the coordinates of the character image disposed in the play field, and advisability of the operation input for each image through the touch panel 14.

A communication interface circuit 104 performs the transmission and reception between an outlet server 2 and the data (forexample, the obj ect position information, the player information, and the like) through a private line 5.

The communication interface circuit 104 transmits an operation command inputted from the operation input portion 114 according to the instructions inputted by the player through the touch panel 14 to the outlet server 2 through the private line 5, and the outlet server 2 allows the game to precede based on the operation command.

Further, the communication interface circuit 104 receives a display command for the first display 11 or the second display 12 from the outlet server 2 through the private line 5. Based on the display command, the game image is displayed on the first display 11, and the fighting image is displayed on the second display 12.

A first depiction processing portion 111 allows the game image including the play field image and the card image to be displayed in the first display 11, and comprises a VDP (Video data Processor), a video RAM, and the like. The first depiction processing portion 111, according to the display command, refers to the object position information (see Fig. 9) and the player information (see Fig. 20) stored in the RAM 103, and extracts the image data from the ROM 102. Then, according to the priority shown in the first display 11 (for example, the play field image, the character image, the button image, the card image in that order), the image data is stored in the video RAM, thereby generating a game image and outputting it to the first display 11. As a result, the first display 11 is displayed with the game image (Figs. 7 and 8).

A second depiction processing portion 112 allows the fighting image showing the fighting between the ally and the enemy to be displayed in the first display 12, and comprises the VDP (Video data Processor), the video RAM, and the like. The second depiction processing portion 112, according to the display command, performs a calculation, a light source computation process, and the like for converting the object (for example, the object constituting the ally character, the object constituting the enemy character, and the like) stored in the ROM 102 from the position on a three dimensional space to the position on a pseudo three dimensional space, and at the same time, based on the calculation result, performs a write processing (for example, a mapping and the like of the texture data for the region of the video RAM designated by polygon) of the image data to be depicted for the video RAM, thereby generating a fighting image and outputting it to the display 12. As a result, the second display 12 is displayed with the fighting image.

A sound reproduction portion 113, according to the instruction from the outlet server 2, outputs predetermined sounds, BGM, and the like from a speaker 12.

The touch panel 14 is a rectangular thin layer material provided in front of the first display, and is constituted such that a pressure sensitive rawmaterial comprising a linear transparent material with predetermined pitches in every direction is disposed and coated by a transparent cover or the like. This touch panel 14 can adopt a conventionally known panel. The touch panel 14 outputs a detection signal showing a touched position when touched to the operation input portion 114.

The operation input portion 114 is a micro-computer comprising a memory 114a and a timer 114b, and buffers a touch position as a data, which is shown by the detection signal outputted from the touch panel 14 in the predetermined region of the memory 114a, and subsequently determines the instructed content based on the data by using the timer 114b and the like, and provides the determined result to the control portion 100 as an operation command. In this manner, the memory 114a of the operation input portion 114 is buffered with the detection signal as a data, and therefore, even when the operation input portion 114 is, for example, inputted with instructions for a plurality of character images instantaneously by the touch panel 14, the processing according to the instructions can be executed simultaneously or in parallel. Further, the predetermined region of the memory 114a provided in the operation input portion 114 is stored with an object position table which stores the object position information relative to the object (image possible to become an operation object by the touch panel 14) displayed in the first display 11 (See Fig. 9). The object position table is referred to when the operation input portion 114 determines the instruction content, and is renewed in sync whenever the obj ect position information stored in the RAM 103 is renewed.

The coin sensor 115, when detecting the coin inputted from the coin insertion slot 15, transmits a predetermined signal to the control portion 100. The ID card reader 116 reads an ID code from the ID card 8 loaded into the ID card loading slot 16, and supplies it to the control portion 100.

The ID card reader 116 functions as acquiring means for acquiring an ID data as player identifying information from the ID card 8.

The character card reader 117 reads identifying information from the character card 9 mounted on the mounting panel 17, and supplies it to the control portion 100. The character card reader 117 functions as reading means for reading the identifying information owned by the character card 9 from the character card 9.

The operation switch 118 supplies a predetermined signal to the control portion 100 when operated by the player. The seven segment indicator 119 is displayed with the arrangement points.

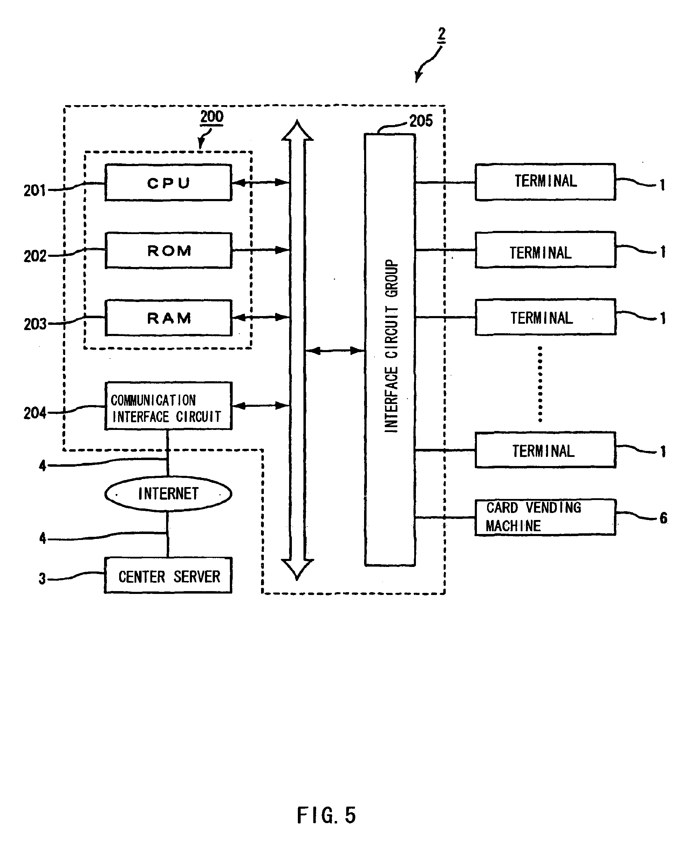

Fig. 5 is a block diagram showing a hardware structure of the outlet server. The outlet server 2 comprises a control portion 200 for controlling the whole operation of the outlet server 2. The control portion 200 comprises a CPU 201, a ROM 202, and a RAM 203.

The ROM 202 stores a random number generation program and the like used for the game control program and the preceding of the game. The CPU 201 of the outlet server 2 executes the game control program stored in the ROM 202, and performs a processing of the preceding of the game.

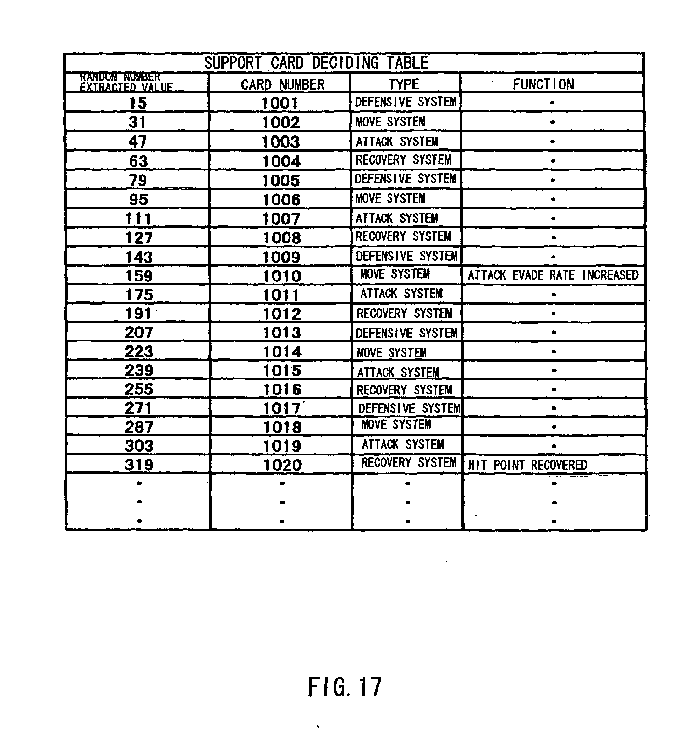

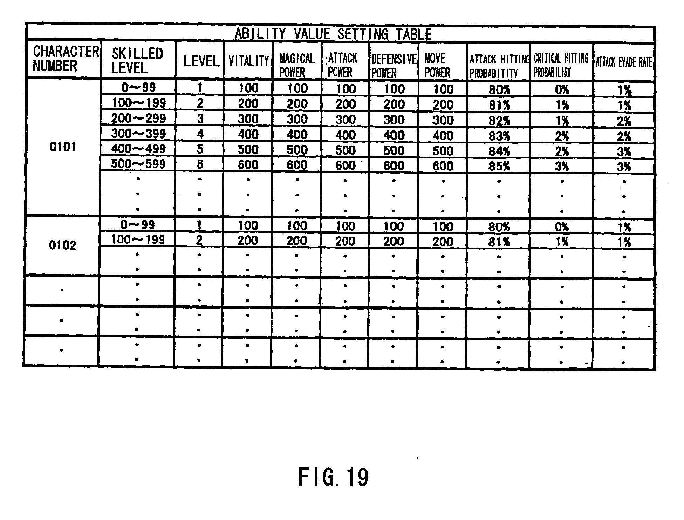

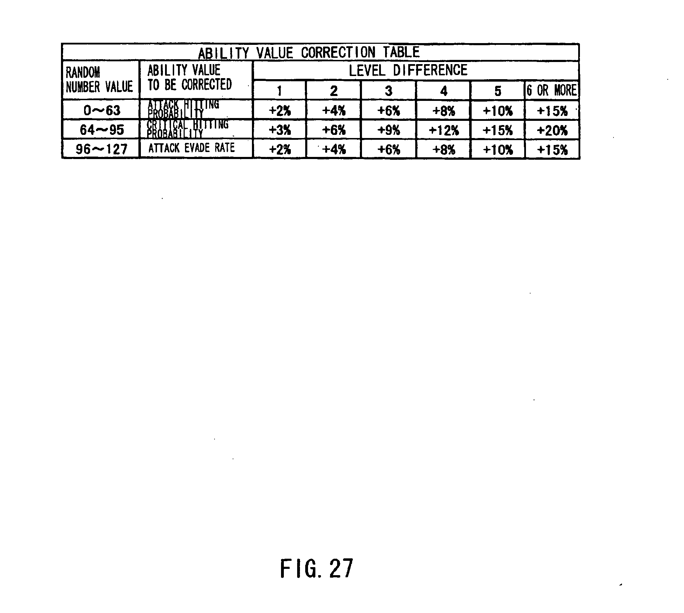

Further, the ROM 202 stores a character specific table (not shown) in which associated with the identifying information owned by the character card and the character appearing on the scene are associated, a support card determine table (see Fig. 17) referred to when the support card to be distributed to each player is decided, an ability value setting table (see Fig. 19) referred to when the ability value of each character is set based on the historical data, an ability value correction table (see Fig. 27) forcorrectingtheabilityvalue of the character when the fighting is performed between the characters, and the like. The ROM 202 functions as table storage means for storing the ability value setting table in which the ability value and the historical data of the character are associated for each character.

The ROM 202 may be a storage mediumbui lt-into the terminal 1 or a detachably attachable storage medium. Further, the ROM 202 may be constituted by both of the medium.

Further, among various data stored in the ROM 202, the data which can be stored in the detachably attachable recording medium may be made readable by driver, for example, such as, a hard disc drive, an optical disc drive, a flexible disc drive, a silicon disc drive, a cassette medium reading machine, and the like. In this case, the recording medium is, for example, a hard disc, an optical disc, a flexible disc, CD, DVD, a semiconductor memory, and the like.

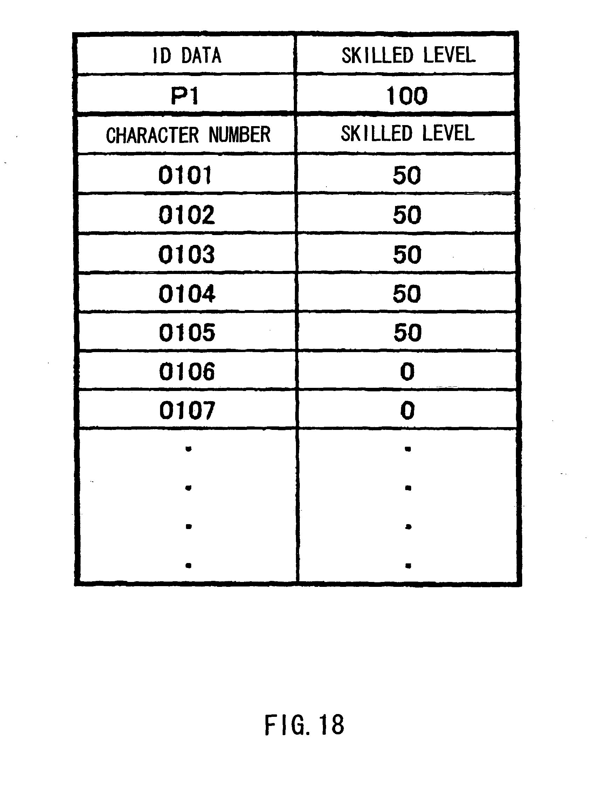

The RAM 203 temporarily stores information in process, variables, and the like. For example, it stores object position information (see Fig. 9), player participation information (see Fig. 13), player information (see Fig. 20), and the like in each terminal 1. Further, when the historical data (see Fig. 18) of the player is supplied from the center server 3, the RAM 203 stores this historical data. The historical data relative to this player includes character specific data intrinsic to each character operated by the player.

A communication interface circuit 204 transmits and receives various data to and from the center server 3 and other outlet servers 2 through a network comprising an Internet and the like.

Further, the outlet server 2 comprises an interface circuit group 205, and is connected to a plurality (eight sets here) of terminal 1 and one set of the card vending machine 6 by the interface circuit group 205 through the private line 5.

The CPU 201 reads and executes the game control program stored in the ROM 202, thereby functioning as the following (A) to (C).

(A) The CPU 201 sets each character specific data in relation to the game result for each character, and stores it in the RAM 303 (character specific data storage means) of the center server 3. At this time, the CPU 201 functions as character specific data setting means. (B) The CPU 201, based on the character specific data extracted from the RAM 303 (character specific data storage means) by the CPU 301 (extracting means) of the center server 3, decides the ability value of the character. At this time, the CPU 201 functions ability value deciding means. Incidentally, in the present embodiment, the CPU 201, when deciding the ability value of the character based on the character specific data, refers to the ability value setting table of the character stored in the ROM 202.

(C) The CPU 201 allows the game to precede by using the ability value decided in the (B). At this time, the CPU 201 functions as game control means.

In the first embodiment, a case will be described, where the CPU 201 functions as ability value deciding means for deciding the ability value of the character based on the character specific data. That is, the case will be described where the CPU 201 functions as character information deciding means for deciding the character information based on the character specific data, and decides the ability value of the character as the character information. However, the character information decided by the character information deciding means is not limited to this example, and for example, the character information deciding means, based on the character specific data, may decide the external appearance structure information relative to the external appearance structure of the character, and the like.

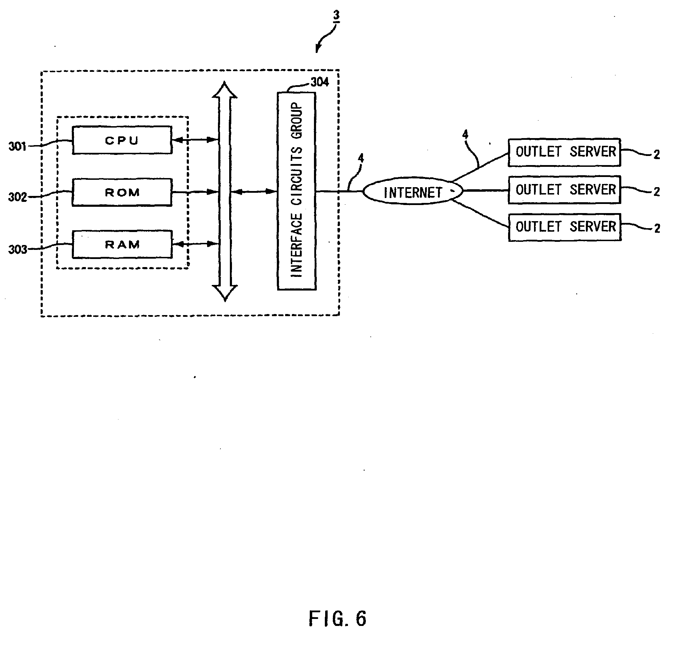

Fig. 6 is a block diagram showing the hardware structure of the center server.

The center server 3 comprises a control portion 300 for controlling the whole operation of the center server 3. The control portion 300 comprises the CPU 301, a ROM 302, and a RAM 303.

The ROM 302 stores the program such as the game control program and like and various types of data.

The ROM 302 maybe a storage mediumbuilt-into the terminal 1 or a detachably attachable storage medium. Further, the ROM 302 may be constituted by both of the medium.

Further, among various data stored in the ROM 302, the data which can be stored in the detachably attachable recording medium may be made readable by driver, for example, such as, a hard disc drive, an optical disc drive, a flexible disc drive, a silicon disc drive, a cassette medium reading machine, and the like. In this case, the recording medium is, for example, a hard disc, an optical disc, a flexible disc, CD, DVD, a semiconductor memory, and the like.

The RAM 303 stores, for example, the ID data of each player, the historical data (see Fig. 18) and the like including the character specific data for each character. The character specific data of the character is stored in the RAM 303 in association with the identifying information of the read obj ect displaying the character for every player, that is, for every ID data as the player identifying information.

The RAM 303 functions as character specific data storage means for storing the character specific data of the character for every player in association of the identifying information for each character.

The communication interface circuit 304 transmits and receives various data to and from a plurality of outlet servers 2 through the network comprising an Internet and the like.

The CPU 301 of the center server 3 receives the identifying information read from the character card 9 by the character card reader 117 of the terminal 1 and the player identifying information acquired from the ID card 8 by the ID card reader 116 of the terminal 1 by the communication interface circuit 304 through the outlet server 2. Then, the CPU 301, based on this identifying information and the player identifying information, extracts the character specific data of the character corresponding to the character card from the RAM 303 (character specific data storage means), and transmits it to the outlet server 2. At this time, the CPU 301 of the center server 3 functions as extracting means.

FIG. 7 is a view showing one example of the game image displayed in the first display of the terminal, and Fig. 8 is a view for explaining about each image included in the game image shown in Fig. 7.

On the left above of a game image 90 displayed in the first display 11, there is disposed a play field image 91. The play field image 91 is an image showing a part of the play field, and is scroll-shown according to the preceding state (for example, the move of the character and the like) of the game. The play field image 91 is disposed with five ally character images 98a to 98e and five enemy character images 99a to 99e.

The character images 98 and 99 are images possible to become the operation objects by the player, and in the game system according to the present embodiment, by touching the character images 98 and 99 through the touch panel 14 (not shown), the operating instruction for the characters can be inputted.

On the left below the game image 90, there is disposed a status image 97 showing the level and ability value of the character operated by the player. On the right above of the game image 90, there are disposed fighting player images 96 showing the fighting players.

On the right below the game image 90, there are disposed five card images 93 (93a to 93e) side by side. The card images 93a to 93c are images (character card images) to show the character cards, and the cards 93d and 93e are images (support card images) to show the support cards.

Among the character cards mounted on the mounting panel 17 by the player and the support cards distributed to the player at the game starting time, five cards selected by lottery and the like are displayed as the card images 93a to 93e. The card image 93 is an image possible to become the operation object by the player, and in the game system according to the present embodiment, by touching the card image 93 through the touch panel 14 (not shown), the card can be used. When the card is used, the card image 93 disappears, and a new card is selected by the lottery and the like, and is displayed as the card image 93.

On the upper side of the card image 93, there are disposed six button images 94 (94a to 94f) side by side. The button image 94 is an image possible to become the operation object of the player, and in the game system according to the present embodiment, by touching the button image 94 through the touch panel 14 (not shown), varies instructions can be inputted.

For example, by operating the button image 94a [ALL-OUT WAR], the instruction to the effect that a full-scale attack be applied to united enemy characters by a plurality of ally characters can be inputted. By operating the button image 94b [JOIN], the instruction to the effect that a plurality of ally characters be joined together on one location can be inputted.

By operating the button image 94c [STOP], the instruction to the effect that the actions of a plurality of ally characters be all stopped can be inputted.

By operating the button image 94d [MOVE], the instruction to the effect that a plurality of ally characters be all moved can be inputted.

By operating the button image 94e [MAP], the instruction to the effect that an image showing the whole play field as the play field image 91 be displayed can be inputted.

By operating the button image 94f [CHANGE], the instruction to the effect that five sheets of the cards displayed as the card images 93 be exchanged with other cards can be inputted.

In this manner, while the game image 90 displayed in the first display 11 is disposed with various types of the images, among the various types of the images disposed in the game image 90, with respect to the image (object) possible to become the operation obj ect by the touchpanel 14, its displayposition and the like are controlled by the obj ect position table shown in Fig. 9.

Fig. 9 is a view showing the object position table. This object position table is a table stored in the RAM 103 and the memory 114a of the terminal 1.

An object code is information intrinsic to each object, and comprises a type and a code. A type [B] is a button image, a type [C] is a card image, a type [P] is an ally character image, and a type [E] is an enemy character image.

Consequently, in the first display 11 or the play field of this terminal 1, there exist six button images corresponding to "B0001" to "B0006", five card images corresponding to "C0120" to "C0122", "C1010", and "C1020", seven ally character images corresponding to "P0101" to "P0107", and seven enemy character images corresponding to "E0110" to "E0116". Incidentally, the card image corresponding to the code in which the thousand's place is 0 is the character card image, and the card image corresponding to the code in which the thousand' s place is 1 is the support card image.

The display position coordinates are coordinates in the first display 11, and are set individually for every terminal 1, and are represented by XY coordinates.

Play field coordinates are coordinates in the play field expanding in the pseudo game space, and are commonly set within the terminal 1 playing the game in the same play field, and are represented by XY coordinates.

Similarly to the character images corresponding to "P0106" and "P0107", though the play field coordinates are set, those where the display position coordinates are not set are the images not displayed in the first display 11 in spite of existing on the play field.

Further, similarly to the button image corresponding to the type [B] or the card image corresponding to the type [C], the play field coordinates are set, but those where the display position coordinates are not set are the images not existing on the play field, though displayed in the first display 11.

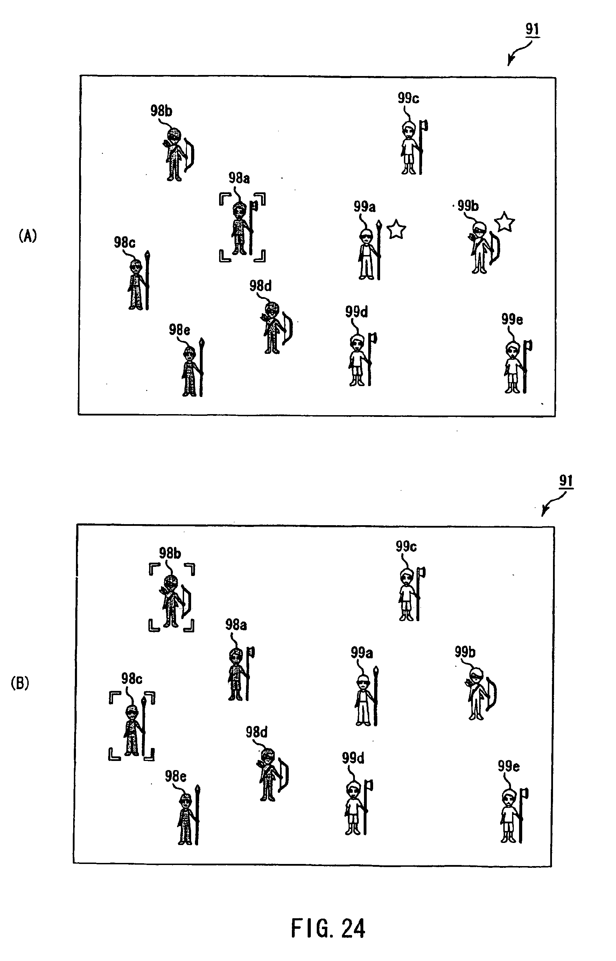

Acceptance or non-acceptance of the operation (acceptance is shown by "○" and non-acceptance by "×" in the action figure) are set for every object in step S237 of the subroutine of Fig. 2 described later. The player touches the object of ";" for acceptance of the operation through the touch panel 14, thereby making it possible to input the instruction. While, even if the player touches the object of "×" for non-acceptance of the operation through the touch panel 14, no inputting of the instruction is possible. Since an operatable character (character image of "○" for acceptance of the operation) and a non-operatable character (character image of "×" for non-acceptance of the operation) are displayed in different modes in the first display 11 (for example, see Fig. 24), the player can easily recognize both of them and can suitably give an adequate instruction.

The object position table shown in Fig. 9 is stored in the predetermined region of the memory 114a provided in the operation input portion 114 of the terminal 1. The operation input portion 114 refers to this object position table, and determines the instruction content inputted through the touch panel 14.

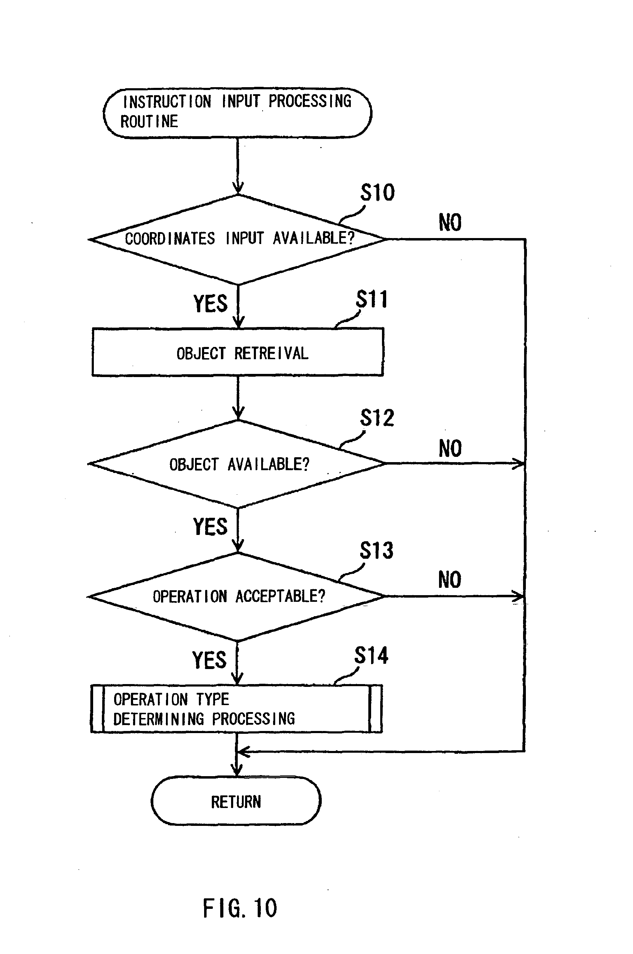

Next, the processing executed in the operation input portion 114 of the terminal 1 will be described by using Figs. 10 to 12.

Fig. 10 is a flowchart showing the subroutine of the operation input processing executed by the operation input portion 114. This subroutine is a subroutine called in a predetermined timing and executed by the operation input portion 114.

First, it is determined whether or not the operation input portion 114 has received a detection signal outputted from the touch panel 14, that is, whether or not the coordinates at the touched position have been inputted into the memory 114a as a data by the detection signal (step S10). When it is determined that the coordinates have not been inputted, the present routine ends.

In the meantime, in case it is determined that the coordinates have been inputted, the operation input portion 114 performs an object search (step S11). In this processing, the operation input portion 114, based on the inputted coordinates, refers to the object position table shown in Fig. 9, and retrieves the object corresponding to the input coordinates. Next, as a result of the object search, the operation input portion 114 determines whether or not there exists the corresponding object (step S12). Where there exists no corresponding object, the present subroutine is completed. At this time, the coordinates of the detection signal stored in the memory 114a as a data are cleared.

In case there exists the corresponding object, the operation input portion 114 refers to the obj ect position table shown in Fig. 9, and determines whether or not the object is unable to accept the operation (step S13). In case the object is unable to accept the operation, the present subroutine is completed. In the meantime, in case the object can accept the operation, an operation type determination processing to be described later is performed (step S14), and the present subroutine is completed.

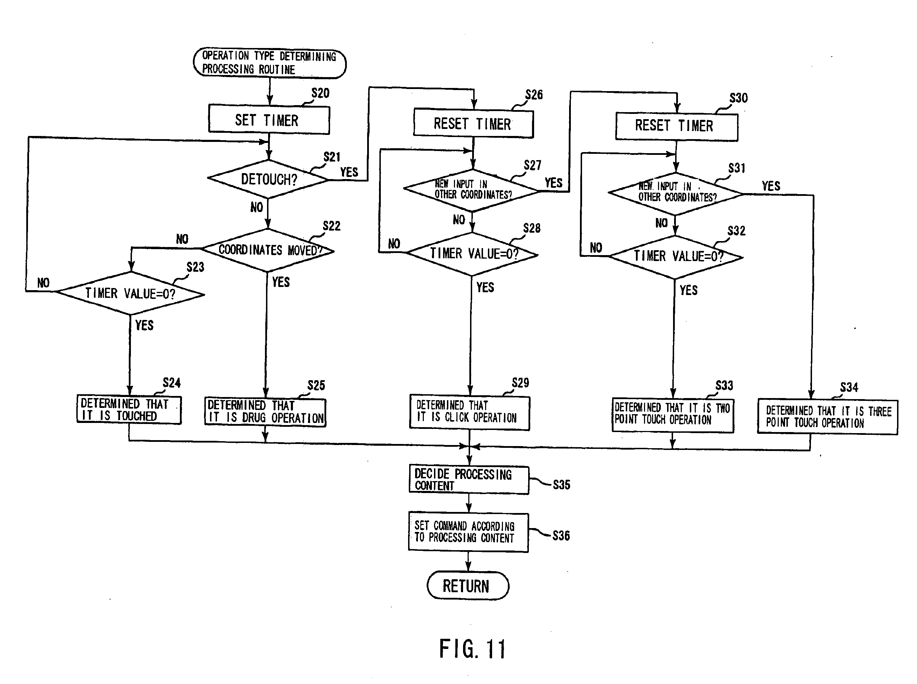

Fig. 11 is a flowchart showing the subroutine called and executed by step S14 of the subroutine shown in Fig. 10.

First, the operation input portion 114 sets a predetermined timer value to the timer 114b (step S20). This timer value, after being set, is subtracted in order at predetermined intervals.

Next, it is determined whether or not detouch (touching completed) has been made (step S21). In this processing, the operation input portion 114 determines that detouch has been made when the input of the detection signal from the touch panel 14 has ceased.

In case it is determined that there has been no detouch made, it is determined whether or not the input coordinates have moved (step S22). In this processing, the operation input portion 114 determines whether or not the touched positions shown by the detection signals from the touch panel 14 move in order.

In case it is determined that the touched positions do not move in order, it is determined whether or not the timer value has become 0 (step S23). In case it is determined that the timer value has become 0, the operation input portion 114 determines that the operation is a touch operation (operation touching the same position of the touch panel 14 for the predetermined period of time). In case it is determined that the time value does not become 0, the processing is returned to step S21. Further, in step S22, in case it is determined that the input coordinates move, the operation input portion 114 determines that the operation is a drag operation.

In step S21, in case it is determined that detouch has been made, the timer 114b is reset (step S26), and it is determined whether or not new inputs have been made into other coordinates (step S27). In case it is determined that no new inputs have been made in other coordinates, it is determined whether or not the timer value is 0 (step S28). In case it is determined that the time value is 0, the operation input portion 114 determines that the operation is a click operation (step S29). In case it is determined that the timer value is not 0, the processing is returned to step S27.

In step S27, in case it is determined that the new inputs have been made into other coordinates, the timer 114b is reset (step S30), and it is determined whether or not new inputs have been made into other coordinates (step S31).

In case it is determined that new inputs have been not made, it is determined whether or not the timer value is 0 (step S32). In case it is determined that the timer value is 0, the operation input portion 114 determines that the operation is a two point touch operation (step S33). In case it is determined that the timer value is not 0, the processing is returned to step S31.

In step S31, in case it is determined that new inputs have been made into other coordinates, the operation input portion 114 determines that the operation is a three point touch operation (step S34).

By executing the processings of steps S20 to S34, the operation input portion 114 can determine whether the operation corresponds to any of a click operation, a touch operation, a drag operation, a two point touch operation or a three point touch operation.

Next, the operation input portion 114, based on the types of the objects corresponding to the touched positions and based on the operation types, refers to the processing content determine table stored in the predetermined region of the memory 114a, and decides the processing content.

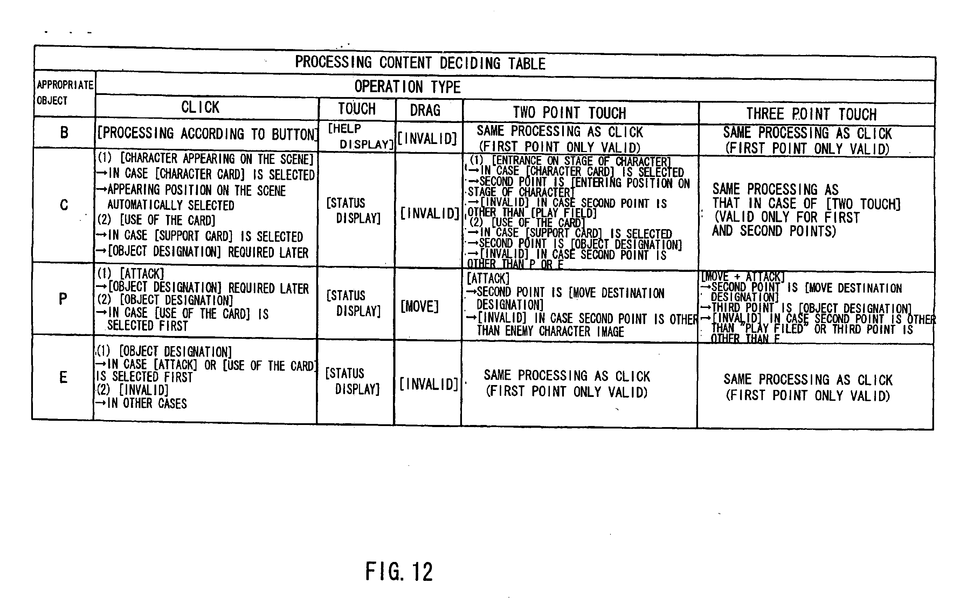

Fig. 12 is a view showing one example of the processing content determine table.

In case the object is B (button image), if the operation type is a [click], the processing content becomes [processing according to the button].

If the operation type is a [touch], the processing content becomes a [help display]. The [help display] is a display of the processing content performed according to the button.

In case the operation type is a [drag], that operation becomes invalid.

In case the operation type is a [two point touch] or [three point touch], the first point only becomes valid, and the same processing as the [click] is performed.

In case the object is C (card image), if the operation type is the [click] or the [two point touch], the processing content becomes an [entrance on the stage of the character] or a [use of the card]. Specifically, in case the character card is selected, the processing content becomes the [entrance on the stage of the character], and in this case, the entering position on the stage of the character is automatically selected by a computer. However, in the case of the [two point touch], the second point is appointed as the entering position on the state of the character, and if the second point is other than the play field, the operation becomes invalid.

In the meant time, in case the support card is selected, the processing content becomes the [use of the card]. In this case, the selection of the ally character image or the enemy character image which becomes the object of the [use of the cards] later is required. However, in the case of the [two point touch], the second point becomes an object designation, and in case the second point is other than the ally character image or the enemy character image, the operation becomes invalid.

If the operation type is the [touch], the processing content becomes a [status display]. The status display in the case of the object being C (card image) is a display of the characteristic or the function of the card. If the operation type is the [drag], the operation becomes invalid.

If the operation type is the [three point touch], the first and second points only become valid, and the same processing as the [two point touch] is performed.

In case the object is P (ally character image), if the operation type is the [click], the processing content becomes an [attack] or an [object designation]. Specifically, in case the [use of the card] is selected earlier, the processing content becomes the [object designation], and in other cases, the processing content becomes the [attack]. However, in case the processing content is the [attack], the [object designation] is required later.

If the operation type is the [touch], the processing content becomes the [status display]. The status display in the case of the object being P (ally character image) is a display of the external appearance and ability of the ally character.

If the operation type is the [drag], the processing content becomes the [move]. In this case, a drag destination is a move destination of the character image.

If the operation type is the [two point touch], the processing content becomes the [attack]. In this case, the second point becomes the object destination, and in case the second point is other than the enemy character image, the operation becomes invalid.

If the operation type is the [three point touch], the processing content becomes the [move + attack]. In this case, the second point becomes a move destination designation, and the third point becomes the object destination. In case the second point is other than the play field or the third point is E (enemy character image), the operation becomes invalid.

In case the object is E (enemy character image), if the operation type is the [click], the processing content becomes the [object destination] or the [invalid]. Specifically, in case the [attack] or the [use of the card] is selected earlier, the processing content becomes the [object designation], and in other cases, the processing content becomes the [invalid] .

If the operation type is the [touch], the processing content becomes the [status display]. The status display in the case of the object being E (enemy character image) is a display of the external appearance, ability and the like of the enemy character.

In case the operation type is the [drag], the processing content becomes [invalid].

If the operation type is the [two point touch] or the [three point touch], the first point alone is valid, and the same processing as the [click] is performed.

After having performed the processing of step S35, the operation input portion 114 sets the operation command corresponding to the processing content to the RAM 103.

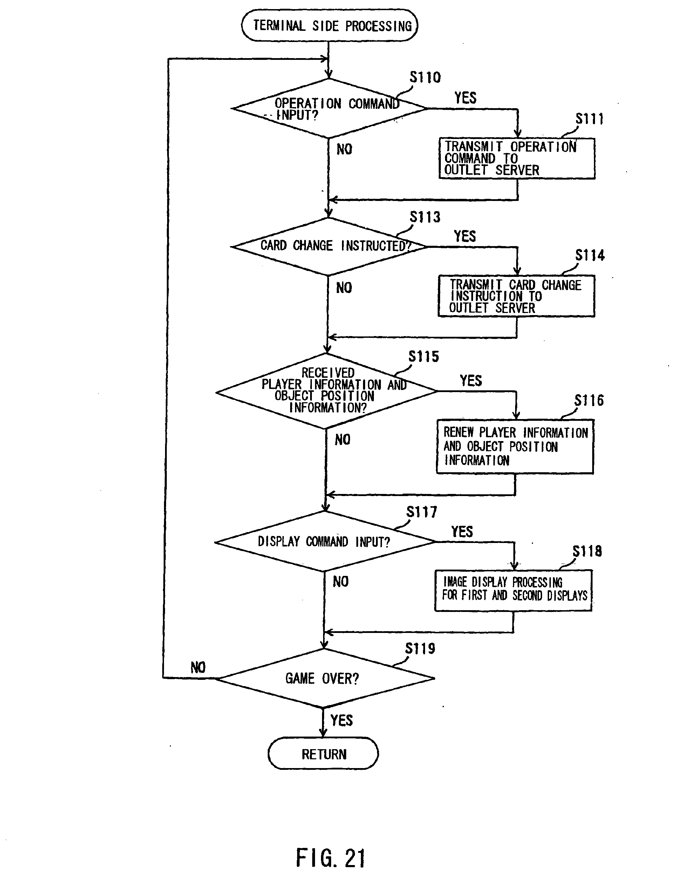

This operation command is transmitted from the terminal 1 to the outlet server 2 in a predetermined timing (see Fig. 21, step S111).

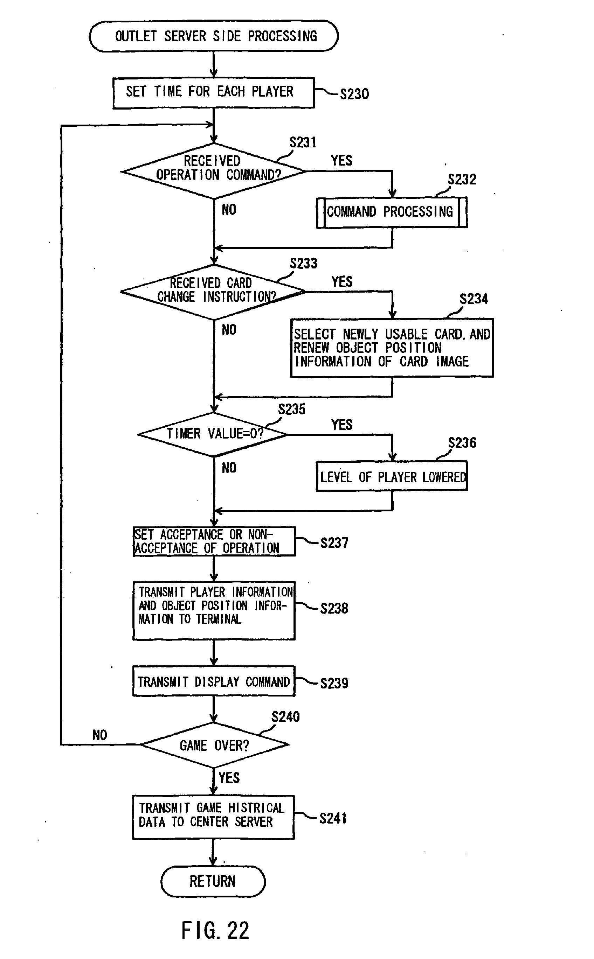

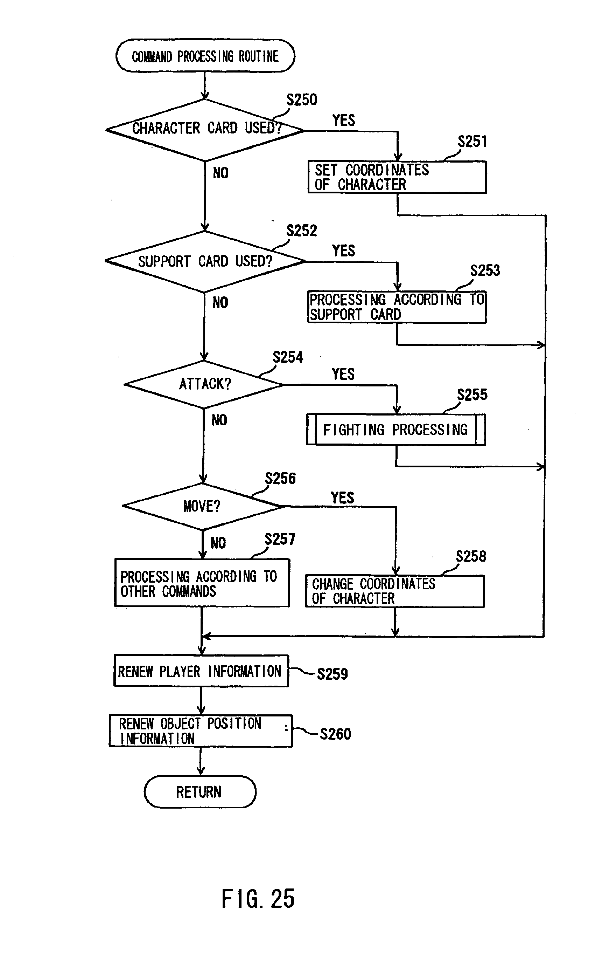

The outlet server 2, based on the operation command, performs, for example, processing relative to the preceding of the game such as the renewal of the object position information and the like (see Figs. 22 and 25), and based on the processing result, transmits a display command to the terminal 1. The first depiction processing portion 111 of the terminal 1, based on the display command, displays the game image including the play field image and the card image in the first display 11.

Next, in case the games are played in the same play field for every four terminal 1, the player participation information stored in the RAM 203 of the outlet server 2 connected to each terminal through the private line 5 and the RAM 303 of the center server 3 will be described by using Fig. 13.

Fig. 13 is a view showing the player participation information.

From the left columns in order are stored the player field numbers (FN) which are the identifying numbers of the player fields given for every player field in conformity with a predetermined rule when the player fields are prepared by the center server 3, receipt sequential numbers (RN) which are the numbers sequentially given when received by the center server 3, machine IDs (CN) which are the identifying information of the terminal 1, outlet server code (SN) which are identifying numbers of the outlet servers 2, and player classification (PC) showing the classification of the players operating the terminal 1.

The player classification (PC) is stored with [players] in case the terminal 1 is operated by human players, and in case the game is operated by CPU players, the [CPU players] are stored. Incidentally, in case the player classification of four players within the play field becomes all [CPUplayers] or no player exists, the player participation information relative to the play field is eliminated.

In the play field of the play field No. 1, the participation in the game in order of terminal a1, terminal a2, terminal b1, and terminal c1 are received by the center server 3.

From the player participation information shown in Fig. 13, it is evident that the play field of the play field No. 1 is constituted by the terminal a1, a2, b1 and c1, and that the terminal a1 and a2 are connected to an outlet server A through the private line, and that the terminal a1, a2, b1, and c1 are operated by human players or the like. Incidentally, the player participation information relative to the play field number [1] shown in Fig. 13 is stored in the predetermined regions of the RAM 203 of the outlet servers A, B and C.

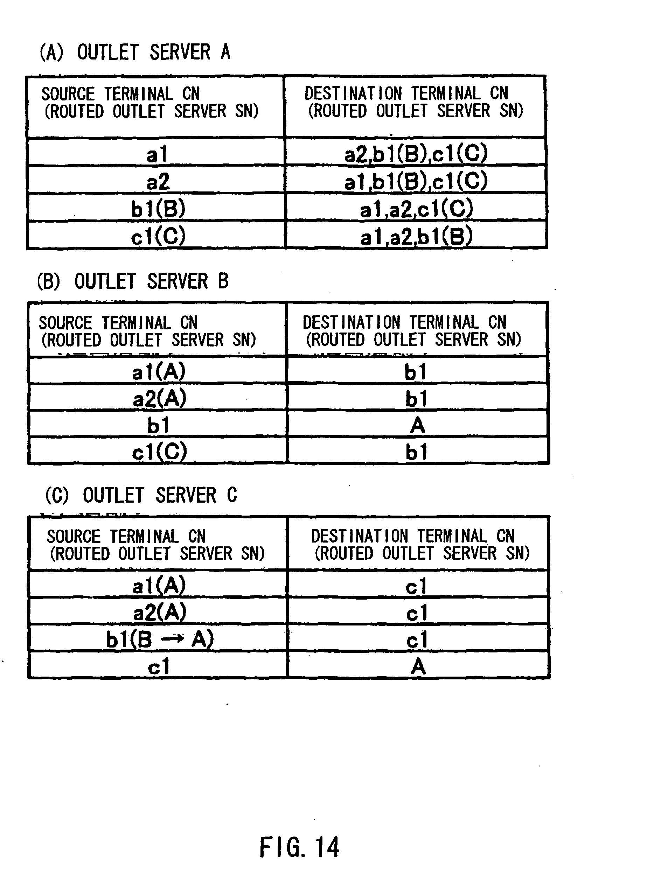

Fig. 14 relates to a game in the play field of the play field number [1], and is a view for explaining the content of the transmission and reception of the data by the outlet servers A, B and C. Tables (a), (b) and (c) are views for explaining the content of the processing by the outlet servers A, B and C, respectively. In the left column of the table are mentioned the machine ID (CN) of the terminal 1 which is the transmitting source of the data received by the outlet server 2 (outlet server A, B or C), and the outlet server code (SN) of the outlet server 2 passed though until received by the outlet server 2. In the right column of the table are mentioned the machine ID (CN) of the terminal 1 which is the transmitting destination of the data transmitted from the outlet server 2 (outlet server A, B or C), and the outlet server code (SN) of the outlet server 2 passed though until received by the terminal 1. Incidentally, the CPU 201 provided in the outlet servers A, B and C, when received the data transmitted from the terminal a1, a2, b1, and c1, renews various types of data stored in the predetermined region of the RAM 203.

The CPU 201 of the outlet server A, as located at the second row from the top of the table (a), receives the data from the terminal a1, and transmits it to the terminal a2 and the outlet servers B and C.

Then, the CPU 201 of the outlet server B, as located at the second row from the top of the table (b), receives the data from the terminal a1 via the outlet server A, and transmits it to the terminal b1. The CPU 201 of the outlet server C, as located at the second row from the top of the table (c), receives the data from the terminal a1 via the outlet server A and, transmits it to the terminal c1.

At the same time, the CPU 201 of the outlet server A, as located at the third row from the top of the table (a), receives the data from the terminal a2, and transmit it to the terminal a1 and the outlet servers B and C.

The CPU 201 of the outlet server B, as located at the third row from the top of the table (b), receives the data from the terminal a2 via the outlet server A, and transmits it to the terminal b1. The CPU 201 of the outlet server C, as located at the third row from the top of the table (c), receives the data from the terminal a2 via the outlet server A, and transmits it to the terminal c1.

The CPU 201 of the outlet server B, as located at the fourth row from the top of the table (b), receives the data from the terminal b1, and transmits it to the outlet server A. Then, the CPU 201 of the outlet server A, as located at the fourth row from the top of the table (a), receives the data from the terminal b1 via the outlet server B, and transmit it to the terminal a1 and a2 and the outlet server C. Then, the CPU 201 of the outlet server C, as located at the fourth row from the top of the table (c), receives the operation signal from the terminal b1 via the outlet servers BandA, and transmits it to the terminal c1.

Similarly, the CPU 201 of the outlet server C, as located at the fifth row from the top of the table (c), receives the data from the terminal c1, and transmit it to the outlet server A. The CPU 201 of the outlet server A, as located at the fifth row from the top of the table (a), receives the data from the terminal c1 via the outlet server C, and transmits it to the terminal a1 and a2 and the outlet server B. Then, the CPU 201 of the outlet server B, as located at the fifth row from the top of the table (b), receives the data from the terminal c1 via the outlet servers C and A, and transmits it to the terminal b1.

In this manner, the CPU 201, between the outlet servers A, B, and C, transmits the data from the terminal a1, a2, b1, and c1, so that, every time the data from the terminal a1, a2, b1, and c1 are received, various types of the data stored in the RAM 203 are renewed, and therefore, the terminal a1, a2, b1 and c1 allow the game to precede by using the data stored in the RAM 203, thereby making it possible to easily control a time synchronization (to make the game preceding status identical) in the preceding of the games between the terminal a1, a2, b1 and c1.

That is, the outlet server 2 (here, the outlet server A) initially receiving the participation in the game receives the data from the terminal 1 connected by the private line 5 and transmits it to all other terminal 1, and at the same time, and receives the data from the terminal 1 connected to another outlet server 2 (here, the outlet server B or C) by the private line 5 through another outlet server 2 (the outlet server B or C), and transmits it to all other terminal 1.

Further, another server 2 (the outlet server B or C) receives the data from the terminal 1 connected by the private line 5 via the outlet server 2 (the outlet server A), and transmits it to the terminal 1 connected by the private line 5.

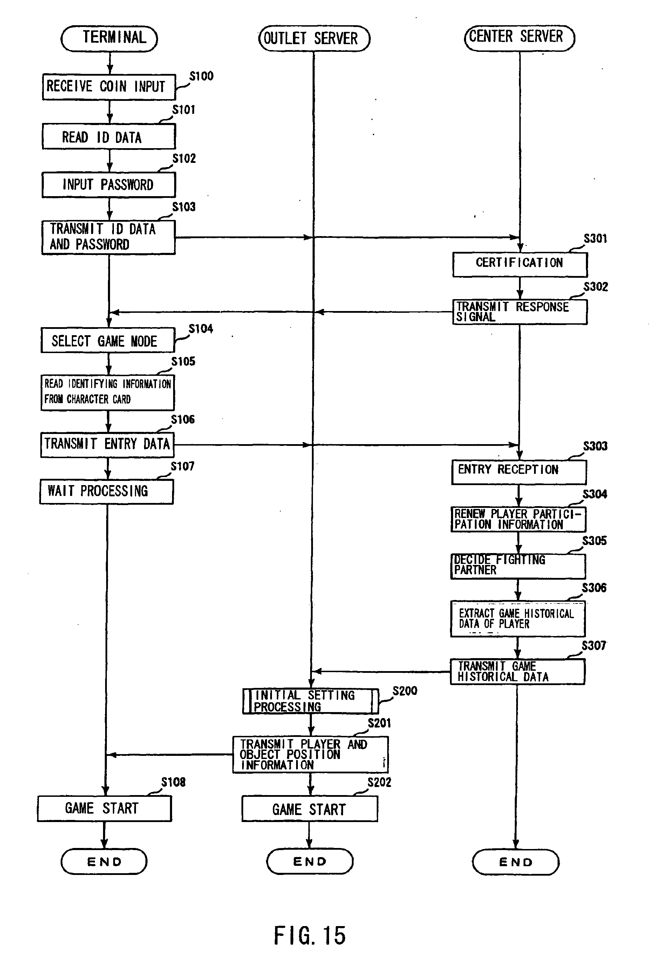

Fig. 15 is a flowchart showing the flow of the processing till the game starts in the terminal 1, the outlet server 2, and the center server 3.

First, the CPU 101 of the terminal 1 receives the input of a coin from the coin insertion slot 15 (step S100). In case the CPU 101, on occasion of detecting the coin, receives a predetermined signal outputted from the coin sensor 115, it reads the ID code of the player by the ID card reader 116 from the ID card 8 inserted into the ID card slot port 16 (step S101). The CPU 101 receives the input of a password by the operation of the player (step S102). Next, the CPU 101 transmits the read ID code to the center server 3 via the outlet server 2 through the private line 5 by the communication interface circuit 104 together with the password inputted by the operation of the player (step S103).

The CPU 301 of the center server 3 determines whether or not there is an ID code received from the terminal 1 in the ID codes stored in the RAM 303. When it is determined that there is an ID code, it is determined whether or not the password of the player stored in the RAM 303 in association with that ID code matches the password received from the terminal 1, thereby performing a certification (step S301). The CPU 301 transmits its result to the terminal 1 as a response signal.

In case the response signal is received from the center 3, the selection of the game mode is received (step S104). As the selection of the game mode, it is possible to make the selection of the play fields where the game is played, and the selection of the fighting parties (for example, the selection of whether or not the game is played by the players in the terminal 1 of the same outlet, the selection of whether or not the CPU players are allowed to participate, and the like).

Next, the CPU 101 reads the identifying information from the character card 9 mounted on the mounting panel 17 by the character card reader 117 (step S105). At this time, the character card reader 117 functions as reading means for reading the identifying information owned by the character card 9 from the character card 9.

The CPU 101 transmits an entry data including the identifying information and the like which have been read to the center server 3 via the outlet server 2 (step S106).

In the meantime, the CPU 301 of the center server 3 receives the entry (step S303), and renews the player participation information shown in Fig. 13 (step S304).

Next, the CPU 301 decides the players (fighting parties) playing a game in the same play field (step S305). In case the human players are even less than four persons or the selection to the effect that the fighting be made with the computer in the game mode selection, the CPU players are set.

Next, the CPU 301 extracts the historical data of each player from the RAM 303 (step S306). This historical data includes the character specific data of the character.

The RAM 303 is stored with the character specific data of the character (in the present embodiment, a skill level in the game) for every player (see Fig. 18). In step S306, the CPU 301, based on the ID data (player identifying information) received from the terminal 1 and the identifying information on the character card 9, extracts the character specific data corresponding to the ID data and the identifying information from among the character specific data stored in the RAM 303 for every player.

Further, in case there exists no character specific data corresponding to the identifying information received from the terminal 1 among the character specific data stored in the RAM 303, since the character specific data cannot be extracted, the CPU 301, for example, performs the processing of allowing an error message and the like to be displayed in the first display 11 of the terminal 1.

Further, even in case, among the character specific data stored in the RAM 303, there exists the character specific data corresponding to the identifying information received from the terminal 1, if that character specific data does not correspond to the ID data (player identifying information) received from the terminal 1, the CPU 301 does not extract that character specific data, and for example, performs the processing of allowing an error message and the like to be displayed in the first display 11 of the terminal 1.

In this manner, in the first embodiment, not only the identifying information read from the character card 9 (read object) by the character card reader 117 (reading means) of the terminal 1, but also the character specific data from the RAM 303 (character specific data storage means) based on the ID data (player identifying information) acquired from the ID card reader 116 (acquiring means) of the terminal 1 are extracted. Then, based on that character specific data, the character information (ability value of the character in the present embodiment) used in the game is decided, and therefore, for example, even in case the character card 9 used in the game by the player P1 is used by the player other than the player P1, the same character information as the character information decided when the player P1 uses the character card 9 is not decided. That is, the character card 9 cannot be used in the same state as the player P1. Consequently, for example, a faulty play and the like of robbing the character card 9 of the skilled player of the game and carrying on the game advantageously by using the character card 9 in the same state as the skilled player or the like can be prevented.

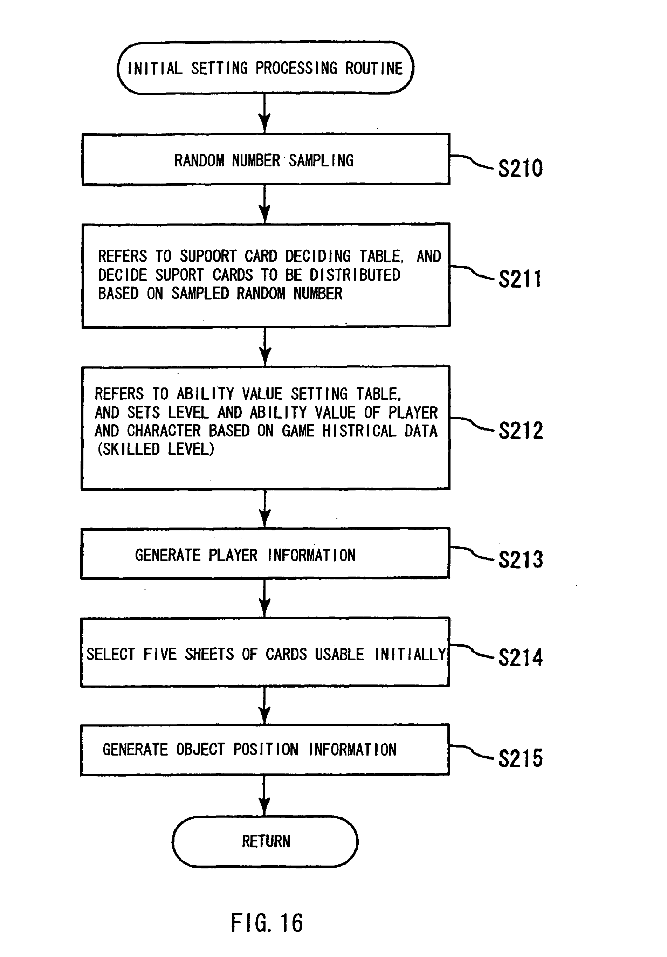

After the processing of step S306, the CPU 301 transmits the extracted historical data (character specific data) to the outlet server 2 (step S307). At this time, the CPU 301, based on the ID data (player identifying information) acquired by the ID card reader 116 (acquiring means) of the terminal 1 and the identifying information read by the character card reader 117 (read means) of the terminal 1, functions as extracting means for extracting the character specific data of the character corresponding to the character card 9 from the RAM 303 (character specific data storage means). The outlet server 2, which receives the historical data (character specific data) from the center server 3, performs an initial setting processing (step S200). In this initial setting processing, player information (see Fig. 20) including each player as well as the level and ability value of the character operated by each player and object position information (see Fig. 9) are generated. The initial setting processing will be described later in detail by using Fig. 16.

Next, the outlet server 2 transmits the generated player information and the obj ect information to the terminal 1, which perform the games in the same play field (step S201). After that, in the terminal 1 and the outlet server 2, the game is started, respectively (step S108 and S202).

As shown in Fig. 15, in the game played by the game system according to the present embodiment, each player can participate at his preferable time, and a plurality of players can participate in the preceding of the games in one play field. This is the characteristic of the real time strategy (RTS).

In the first embodiment, while a case has been described where, based on the ID data stored in the ID card owned by the player and the password inputted by operating the terminal by the player, the player is identified (see Fig. 15), in the present invention, the method of identifying the player is not limited to this, and for example, based on the ID data only stored in the ID card, the player may be identified, and without using the ID card, based on the data such as the password and the like inputted by operating the terminal by the player, the player may be identified.

Fig. 16 is a flowchart showing the subroutine of the initial setting processing called and executed in step S200 of the flowchart shown in Fig 15 in the outlet server 2.

First, the CPU 201 of the outlet server 2 executes a random number generation program stored in the ROM 202, and performs the sampling of random numbers (step S210). The number of random numbers to be sampled is the number of support cards distributed to four players. For example, in case the support card is distributed 25 pieces each to each player, 100 pieces of random numbers are sampled.

Next, the CPU 201 refers to the support card determine table stored in the ROM 202, and based on the random number value sampled, decides the support card to be distributed to each player (step S211).

Fig. 17 is a view showing one sample of the support card determine table.

The left most column is stored with the random number extracted values, and the right column next to it is stored with card numbers, and each card number is associated with the type and function of the support card.

This support card determine table is a look-up table, and for example, if the random number extracted value is any of 0 to 15, the support card of "1001" is selected.

Next, the CPU 201 refers to the ability value setting table, and based on the historical data (skill level as the character specific data) including the character specific data, sets the level and the ability value with the player and the character (step S212). In the step S212, with regard to the four players playing the game in the same play field, the CPU 201 sets the level and the ability value with the player and the character operated by the player.

Fig. 18 is a view showing one example of the historical data (character specific data).

While Fig. 18 shows the historical data of the character corresponding to the player P1, the RAM 303 of the center server 3 is stored with the historical data of the character for every player. That is, the historical data of the character is controlled for every player. The ID data is a data stored in the ID card 8 (not shown), and is a data allotted to every player by the center server 3 when the ID card 8 is sold from the card vending machine 6. The historical data shown in Fig. 18 is a historical data of the player "P1".

The column of the character number is stored with the character numbers of the characters used (operated) in the game by the player "P1".

The skill level is a character specific data in the present invention, and is set individually for the player and each character. The skill level is raised when the predetermined conditions (for example, winning a victory over the fighting between the characters, predetermined points being scored by players, and the like) are satisfied.

In the present embodiment, while a case will be described where the character specific data is a skill level, in the present invention, the character specific data is not particularly limited, and for example, the data and the like relative to personal effects or accessories of the character for deciding the external appearance structure information of the character can be cited.

Fig. 19 is a view showing one example of the ability value setting table.

In the ability value setting table, the skill level, the level and the ability value are associated for each character. The ability value, as shown in Fig. 19, consists of plural items such as vitality (life force), magical power, attack power, defensive power, locomotive faculty, attack hitting probability, critical hitting probability, and attack evade rate.

Although not shown in the action figure, in the ability value setting table, with regard to the players also, the skill level, the level and the ability value are associated.

The level shows the strength of the player or the character over the game by stages, and if it is the same player or character, higher the numerical value is, higher the ability value of the player or character is, and this implies that it is strong also over the game.

The life force shows the remaining physical strength of the player or the character, which is reduced when suffering damage by the attack from the enemy character and the like. When the vitality (life force) of the player is reduced to 0, the game is over. Further, when the vitality (life force) of the ally character is reduced to 0, that character becomes extinct from the play field, and cannot be used in the game for the predetermined period of time.

The magical power is an action point required for performing a predetermined action (for using the magical power here) by the character. When the character uses the magical power, the magical power is reduced by a predetermined value according to the types of the magical power. The magical power is recovered with time at a predetermined speed in case it is reduced while in the fighting. The recovery speed of the magical power changes according to the level of the character.

The attack power is a power by which the character can give damage to another character, and higher the numerical value thereof is, greater the amount of damage is, which can be given to another character.

The defensive power is a power to defend an attack from another character, and higher the numerical value thereof is, damage suffered from the attack from another character can be reduced.

The locomotive faculty affects the movable distance on the play field and the frequency of actions by the character while in the fighting, and higher the numerical value thereof is, longer the distance is, in which the character can move on the play field, so that the frequency of actions while in the fighting is increased.

The attack hitting probability is a ratio that can allow an attack by the character to hit another character, and higher the numerical value thereof is, higher the probability is, which can allow the attack to hit.

The critical hitting probability is a ratio that can give additional damage when the character attacks another character, and higher the numerical value thereof is, higher the probability is, by which additional damage can be given.

The attack evade rate is a rate that evades an attack in case the character receives the attack from another character, and higher the numerical value thereof is, higher the probability is, by which the attack can be evaded. When this processing of step S212 is executed, the CPU 201 of the outlet server 2, based on the historical data (skill level as the character specific data) extracted from the RAM 303 (character specific data storage means) by the CPU 301 (extractingmeans) of the center server 3, functions as ability value deciding means for deciding the ability value of the character. Incidentally, in the present embodiment, the CPU 201 of the outlet server 2, when deciding the ability value of the character, refers to the ability value setting table (see Fig. 19) of the character stored in the ROM 202 (table storage means).

After the processing of step S212, the CPU 201, based on the processing results of the step S211 and step S212, generates player information (step S213).

Fig. 20 is a view showing one example of the player information.

The upper side table shows the player information of the player "P1". The level and ability value of the player and each character set in step S212 are stored, and at the same time, the card numbers of a plurality (for example, 25 sheets) of support cards distributed in step S211 are stored. The player information generated in the RAM 203 of the outlet server 2 includes the data showing the ability value of the character decided by the processing of step S212.

Further, the lower side table shows the player information of the player "P2". In the action figure, while the player information only on two players is shown, in step S213, the player information on four players playing the game in the same play field is generated.

Next, the CPU 201 selects five sheets of the cards initially usably by lottery (step S214). The cards that are taken as usable are the cards displayed in the first display 11 of the terminal 1 as the card images 93a to 93e, and five sheets are selected from among the character cards and the support cards by lottery. In step S214, for the four players playing the game in the same play field, five sheets of the cards are selected that are taken as initially usable.

Next, the CPU 201 generates object position information shown in Fig. 9 (step S215). In this processing, the CPU 201 disposes the predetermined characters on the play field so as to set play field coordinates, and based on the play field coordinates, sets display position coordinates in each terminal 1. Further, based on the selection result in step S214, the CPU 201 sets the display position coordinates of the card image in each terminal 1. Further, it performs the setting processing and the like of the display position coordinates of the button image in each terminal 1.

After that, the present subroutine is completed.

The object position information (see Fig. 9) generated in the subroutine shown in Fig. 16 and the player information (see Fig. 20) are transmitted to the terminal 1 in step S201 of the flowchart shown in Fig. 15. After that, while the game precedes, as described by using Fig. 14, the transmission of the data is performed between the outlet server 2 and four terminal 1, and its time synchronization is controlled, and therefore, the RAM 203 of the outlet server 2 and the RAM 103 of the four terminal 1 are always stored with the same object position information and the player information.

Fig. 21 is a flowchart showing the outline of the processing executed in the terminal 1 while the game precedes.

First, the CPU 101 of the terminal 1 determines whether or not the operation command is inputted (step S110). The operation command, as described by using Figs. 10 to 12, is a command set to the RAM 103 by the operation input portion 114 according to the instruction inputted by the player through the touch panel 14, and in step S110, the CPU 101 determines whether or not the operation command is set to the RAM 103.

In case the operation command is inputted from the operation input portion 114, the CPU 101 transmits the operation command to the outlet server 2 by the communication interface circuit 104 through the private line 5 (step S111). This processing corresponds to the processing of step S231 of the flowchart shown in Fig. 22.

The outlet server 2 suitably receives the operation commands from four terminal 1, and based on the operation command, performs the processing of proceeding the game. Then, based on this processing result, the outlet server 2 transmits the display command to each terminal 1 for the first display 11 or the second display 12 (Fig. 22, step S238). Further, the outlet server 2, based on the processing result, renews the player information and the object position information, and transmits the player information and the object position information after the renewal to each terminal 1 (Fig. 22, step S239). The processing executed in the outlet server 2 will be described in detail later by using Fig. 22.

In case it is determined that the operation command is not inputted in step S110 or the processing of step S111 is executed, next, the CPU 101 determines whether or not a card change instruction is inputted (step S113). The card change instruction in this step S113 is an instruction to the effect that the card images 93a to 93e displayed in the first display 11 be changed, that is, the instruction to the effect that the usable card be changed. The card change instruction here is not the instruction to the effect that a trading card 9 mounted on the mounting panel 17 be physically changed (for example, removal, addition, and the like of the trading card) .

The card change instruction in step S113 can be inputted by touching a button image 94f [change] among the game images 90 displayed in the first display 11 through the touch panel 14 (see Figs. 7 and 8).

In case it is determined that the card change instruction is inputted, the CPU 101 transmits the card change instruction to the outlet server 2 through the private line 5 by the communication interface circuit 104 (step S114). In the meantime, the outlet server 2, based on the received card change instruction, newly selects a usable card, and renews the obj ect position information on the card image.

In case it is determined that the card change instruction is not inputted in step S113 or the processing of step S114 is executed, the CPU 101 determines whether or not the play information and the object position information is received from the outlet server 2 (step S115).

This processing correspond to the processing of step S238 of the flowchart shown in Fig. 22. In this processing, the CPU 101 determines whether or not the transmission of the data (the player information and the object position information) between the outlet server 2 described by using Fig. 14 and the four terminal 1 is performed.

In case it is determined that the player information and the object position information are received from the outlet server 2, the CPU 101 renews the player information and the object position information stored in the RAM 103 (step S116). As a result, the player information and the object position information stored in the RAM 103 of the terminal 1 are synchronized in time with the player information and the object position information stored in the RAM 203 of the outlet server 2. Incidentally, in case the object position information stored in the RAM 103 is renewed, the object position information stored in the memory 114a of the operation input portion 114 is also renewed.

The player information transmitted from the outlet server 2 includes the data showing the ability value of the character decided by the CPU 201, which functions as the ability value deciding means in the step S212 or step S234 of Fig. 22 to be described later.

In step S115, in case it is determined that the player information and the object position information are not received from the outlet server 2 or the processing of step S116 is executed, the CPU 101 determines whether or not the display command is received from the outlet server 2 (step S117). This processing corresponds to the processing of step S239 of the flowchart shown in Fig. 22, and from the CPU 201 of the outlet server 2, the display command to the effect that the character image and the card image be display is transmitted.

In case it is determined that the display command is received, the CPU 101 performs the image display processing for the first display 11 and the second display 12 (step S118). In this processing, the CPU 101 supplies the display command to the first depiction processing portion 111 or the second depiction processing portion 112. The first depiction processing portion 111, according to the display command, refers to the object position information (see Fig. 9) and the player information (see Fig. 20) stored in the RAM 103, and extracts the image data from the ROM 102. Then, according to the priority displayed in the first display 11 (for example, the play field image, the character image, the button image, and the card image in that order), the image data is stored in the video RAM to generate a game image, and the game image is outputted to the first display 11. As a result, the first display 11 is displayed with the game image (see Figs. 7 and 8) .

Further, according to the display command, the second depiction processing portion 112 performs a calculation, a light source computation process, and the like for converting the object (for example, the object constituting the ally character, the object constituting the enemy character, and the like) stored in the ROM 102 from the position on a three dimensional space to the position on a pseudo three dimensional space, and at the same time, based on the calculation result, performs a write processing (for example, a mapping and the like of the texture data for the region of the video RAM designated by polygon) of the image data to be depicted for the video RAM, thereby generating a fighting image and outputting it to the display 12. As a result, the second display 12 is displayed with the fighting image.

In step S117, in case it is determined that the display command is not received or the processing of step S118 is executed, the CPU 101 determines whether or not the game is completed (or over) (step S119). In this processing, the CPU 101 determines the game is completed (or over) when the fighting by four players in the play field is completed, when the player operating this terminal 1 loses in the game or when an instruction to the effect that the game be completed is inputted by the player. In case it is determined that the game is not completed, the processing is returned to step S110. In the meantime, in case it is determined that the game is completed (or over), the present subroutine is completed.

Fig. 22 is a flowchart showing the outline of the processing executed in the outlet server 2 while the game proceeds.

First, the CPU 201, when starting the game, sets a timer corresponding to the player in a predetermined region of the RAM 203 (step S230).

The timer value of this timer is subtracted in order at predetermined time intervals after being set, and when the player of a higher level fights against (fighting between the characters) the player of a lower level, the timer corresponding to the player of a higher level is reset, and when the timer value becomes 0, the level of the player corresponding to the timer is reduced by 1.

In step S230, the timer for all four players may be set or the timer may be set only for the predetermined numbers of players of higher level among four players. Further, the timer value may be changed according to the level of the player.

Next, the CPU 201 determines whether or not the operation command is received from the terminal 1 through the private line 5 by the communication interface circuit 204 (step S231) . This processing is a processing corresponding to step S111 of the flowchart shown in Fig. 21.

In case it is determined that the operation command is received, the CPU 201, based on the operation command received from the terminal 1, executes a command processing allowing the game to proceed (step S232). The command processing will be described later in detail by using Fig. 25.

In step S231, in case it is determined that the operation command is not received or the processing of step S232 is executed, the CPU 201 determines whether or not the identifying information (identifying information read from the character) is received from the terminal 1 through the private line 5 by the communication interface circuit 204 (step S233). This processing corresponds to step S114 of the flowchart shown in Fig. 21.

In case it is determined that the identifying information is received from the terminal 1, the CPU 201 refers to the ability value setting table, and based on the historical data (skill level as the character specific data), sets the level and ability value of the character (step S234). Since this processing is the same as the processing of step S212 of the subroutine shown in Fig. 16, and is previously described, the description thereof will be omitted here.

At this time, the CPU 201 of the outlet server 2, based on the historical data (skill level as the character specific data) extracted from the RAM 303 (character specific data storage means) by the CPU 301 (extracting means) of the center server 3 and stored in the RAM 202 of the outlet server 2 in steps S306 and S307 of Fig. 15, functions as the ability value deciding means for deciding the ability value of the character. Incidentally, in the present embodiment, the CPU 201 of the outlet server 2, when deciding the ability value of the character, refers to the ability value setting table (see Fig. 19) of the character stored in the ROM 2 02 (table storage means).

In step S233, in case the identifying information is not received or the processing of the step S234 is executed, the CPU 201 determines whether or not the timer value of the timer set corresponding to the player in step S230 becomes 0 (step S235). In case it is determined that the timer value becomes 0, the processing in which the level of the player corresponding to the timer is reduced by 1 is performed (step S236).

In step S235, in case it is determined that the timer value does not become 0 or the processing of the step S236 is executed, the CPU 201 performs the processing of setting acceptance or non-acceptance of the operation on the object displayed in the first display 11 of each terminal 1 (step S237).

Here, the processing of setting acceptance or non-acceptance of the operation in step S237 will be described.

Acceptance or non-acceptance of the operation, as described by using Fig. 9, is decided for every object. Touching the object of ";" for acceptance of the operation through the touch panel 14 makes it possible to input the instruction, but touching the object of "×" for non-acceptance of the operation through the touch panel 14 does not make it possible to input the instruction.

The CPU 201, when performing the processing of step S237 initially after the game is started, sets the timers (hereinafter referred to as operation acceptance timer) corresponding to all the players and all the characters existing on the play field to the RAM 203, respectively. Further, the processing of step S234 and the processing of step S251 (see Fig. 25) to be described later are performed, and in case a new character appears on the play field, in step S237, the CPU 201 sets the operation acceptance timer corresponding to this new character to the RAM 203.

The initial value of the timer value (hereinafter referred to also as operation acceptance timer value) of the operation acceptance timer is set according to the locomotive faculty of each player or character. Specifically, higher the locomotive faculty is, smaller the operation acceptance timer value is, and lower the locomotive faculty is, larger the operation acceptance timer value is set. The CPU 201 performs an interrupt processing and the like at a predetermined cycle, and subtracts in order the timer value of the operation acceptance timer set to the RAM 203.

The processing of step S237 is continuously performed in the course of repeating the processings of step S230 to S240. In that course, in case the operation acceptance timer value of a certain character becomes 0, in step S237, the CPU 201 permits the operation of that character, and makes the operation of the object position information stored in the RAM 203 as ";". After that, in case the instruction for that character is inputted, in step S237, the CPU 201 makes the operation of the object position information stored in the RAM 203 as "×", and the operation acceptance timer is rest.

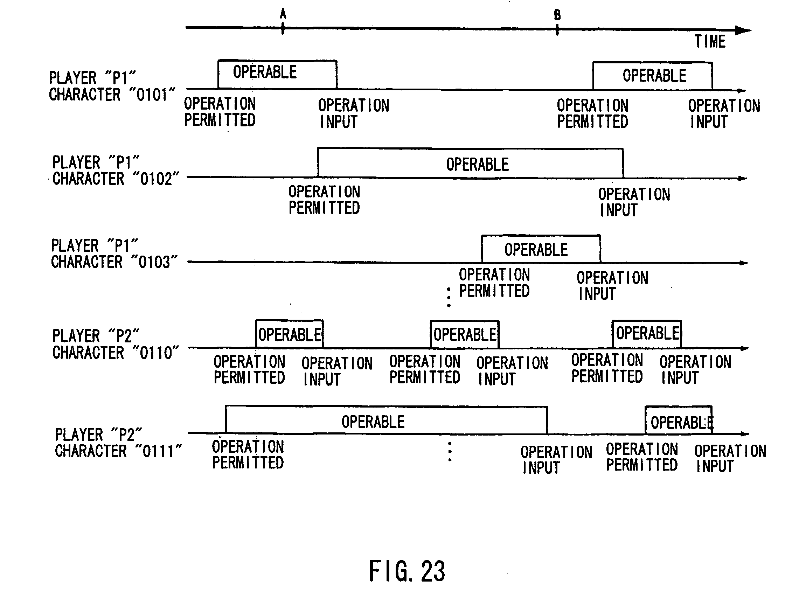

In case the processing of step S237 is thus continuously executed, acceptance or non-acceptance of the operation of each character undergoes a transition similarly to the time chart shown in Fig. 23.

In the action figure, an [operation permitted] shows a timing in which the operation of the object position information stored in the RAM 203 by the CPU 201 is made as ";". Further, the [operation permitted] shows a status in which the operation of the object position information stored in the RAM 203 is made as ";". An [operation input] shows a timing in which the operation of the object position information inputted with a predetermined instruction through the touch panel 14 of the terminal 1 and stored in the RAM 203 by the CPU 201 is made as "×".

The period from the [operation input] to the [operation possible] is a period in which the operation acceptance timer is subtracted in order, and when the operation acceptance timer value becomes 0, the [operationpermitted] is effected, thereby putting it in a state of the [operation possible]. Since the operation acceptance timer value is set shorter as the locomotive faculty of the character and the like become higher, it is possible to give the instruction to the character and the like having high locomotive faculty with high frequency, and the game can advantageously precede.

Further, since the period of the [operation possible] is continued until the [operation input] is effected, and is completed when the [operation input] is effected, it would be rather favorable to perform the [operation input] quickly after the [operation permitted] is effected and make the period of the [operation possible] short so as to quicken the timing in which the next [operation permitted] is performed. As a result, it is possible to give the instruction to the character with high frequency, and the game can advantageously proceed.

Proceeding the game in real time in this manner is the characteristic of the real time strategy (RTS).

After performing the processing of step S237, the CPU 201 performs the processing of transmitting the player information and the object position information renewed in steps S232, S234, S236 or S237 to each terminal 1 (step S238). This processing is a processing corresponding to step S115 of the flowchart shown in Fig. 21.

In step S238, the player information transmitted from the outlet server 2 to the terminal 1 includes the data showing the ability value of the character decided by the CPU 201 which functions as the ability value deciding means in step S212 or step S234.

Next, the CPU 201, based on the processing results in steps S232, S234, S236 or S237, transmits the display command to each terminal 1 (step S239).

This processing is a processing corresponding to step S117 of the flowchart shown in Fig. 21. In step S239, the CPU 201 transmits the display command to the effect that the character image and the card image in which the display position coordinates are set in the object position information (see Fig. 9) be displayed to each terminal 1. As a result, in step S118 of Fig. 21, the game image including the character image and the card image are displayed in the first display 11 (see Figs. 7 and 8).

Further, in step S239, the CPU 201 transmits the display command to the effect that an operable character image and an unoperable character image be displayed in different modes to each terminal 1.

As a result, the first display 11 of the terminal 1 is, for example, displayed with the game image including the play field image as shown in Fig. 24.

Fig. 24 (A) is a view showing a play field image 91 displayed in the first display 11 of the terminal 1 at a point A of the time chart shown in Fig. 23. While the play field image 91 is displayed with five ally character images 98a to 98e and five enemy characters 99a to 99e, four peripheral corners of the operable ally character (the ally character 98a in Fig. 24(A)) are displayed with the images showing parentheses. Further, in the vicinity of the enemy character images (enemy characters 99a and 99b in Fig. 24 (A)) operable by the player of the fighting partner, the images showing asterisk marks are displayed.

Further, Fig. 24 (B) is a view showing the play field image 91 shown in the first display 11 of the terminal 1 at a point B of the time chart shown in Fig. 23.

In the operable ally character images (the ally characters 98b and 98c in Fig. 24(B)), the peripheral four corners of the operable ally character images are displayed with the images showing parentheses.

Next, it is determined whether or not the game is completed (or over) (step S240). In this processing, the CPU 201 determines that the game is completed (or over) when the fighting of four persons in the play field is completed or when the instruction to the effect that all four players complete the game is inputted.

When it is determined that the game is not completed, the processing is transferred to step S231. In the meantime, when it is determined that the game is completed (or over), the CPU 201 transmits the historical data stored in the RAM 203 through the communication line 4 by the communication interface circuit 204 to the center server 3 (step S241). This historical data includes the character specific data of the character. As a result, the historical data (includes the character specific data) stored in the RAM 303 of the center server 3 is renewed.

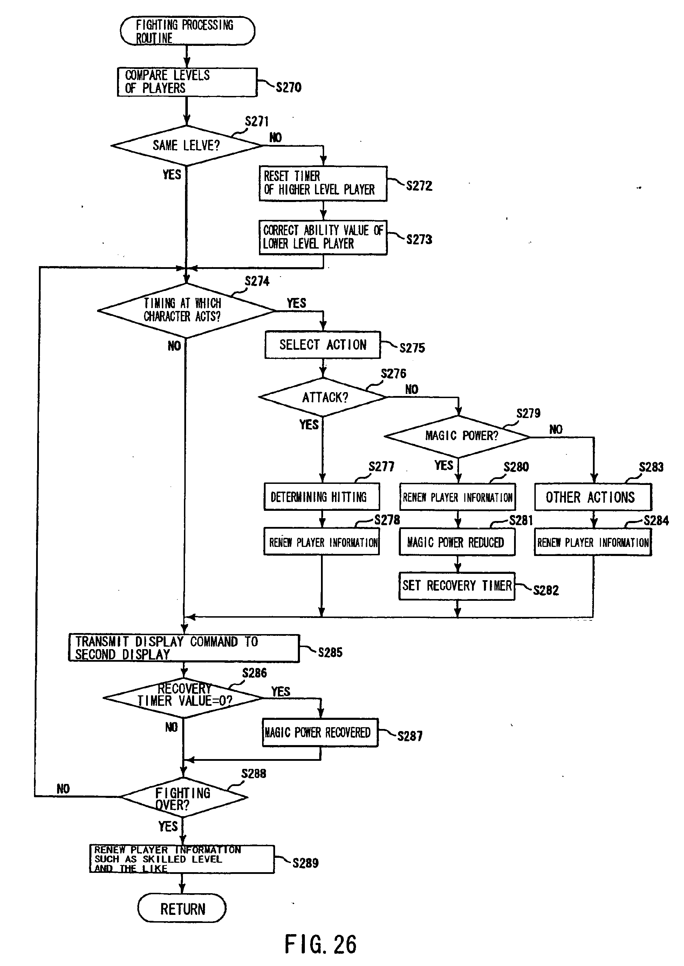

Incidentally, the historical data is the data renewed by the CPU 201 of the outlet server 2 every time the processing of step S289 of Fig. 26 described later is performed while the game proceeds. The CPU 201 of the outlet server 2 sets each character specific data in association with the game result for each character, and functions as character specific data setting means stored in the RAM 303 (character specific data storage means) of the center server 3.

Fig. 25 is a flowchart showing the subroutine of the command processing called and executed in step S232 of the flowchart shown in Fig. 22.

First, the CPU 201 determines whether or not the operation command to the effect that the character cardbe used is received from the terminal 1 (step S250).

In case it is determined that the operation command to the effect that the character card be used is received from the terminal 1, the CPU 201 sets play field coordinates of the character, and based on that play field coordinates, sets display position coordinates of the character image in the first display 11 of each terminal 1 (step S251).

After that, the CPU 201 renews the player information stored in the RAM 203 (step S259), and further, renews the object position information stored in the RAM 203 (step S260), so that the present subroutine is completed.

In step S250, in case it is determined that it is not the operational command to the effect that the character card be used, the CPU 201 determines whether or not it is the operation command to the effect that the support cardbe used (step S252).

In case it is determined that the operation command to the effect that the support card be used is received from the terminal 1, the CPU 201 executes the processing according to the support card (step S253). After that, the CPU 201 renews the player information stored in the RAM 203 (step S259), and further, renews the object position information stored in the RAM 203 (step S260), so that the present subroutine is completed.

In step S252, in case it is determined that it is not the operational command to the effect that the support card be used, the CPU 201 determines whether or not it is the operation command to the effect that an attack be made (step S254).

In case it is determined that the operation command to the effect that the attack be made is received from the terminal 1, the CPU 201 executes a fighting processing (step S255). The fighting processing will be described later in detail.

After that, the CPU 201 renews the player information stored in the RAM 203 (step S259) according to the fighting result, and further, renews the object position information stored in the RAM 203 (stepS260), so that the present subroutine is completed.

In step S254, in case it is determined that it is not the operational command to the effect that the attack be made, the CPU 201 determines whether or not it is the operation command to the effect that move be made (step S256).

In case it is determined that the operation command to the effect that move be made is received from the terminal 1, the CPU 201 changes the play field coordinates of the character, and based on that play field coordinates, sets the display position coordinates of the character image in the first display 11 of each terminal 1 (step S258).

After that, the CPU 201 renews the player information stored in the RAM 203 (step S259), and further, renews the object position information stored in the RAM 203 (step S260), so that the present subroutine is completed.

In step S256, in case it is determined that it is not the operation command to the effect that move be made, the CPU 201 executes the processing according to other commands (step S257).

After that, the CPU 201 renews the player information stored in the RAM 203 (step S259), and further, renews the object position information stored in the RAM 203 (step S260), so that the present subroutine is completed.

Next, the fighting processing executed in the outlet server 2 on the occasion of the fighting being performed between the characters will be described.

Fig. 26 is a flowchart showing the subroutine of the fighting processing called and executed in step S255 of the flowchart shown in Fig. 25.

Incidentally, in the following, a description will be made on the case as an example, where a character "0101" operated by the player "P1" and a character "0110" operated by the player "P2" shown in Fig. 20 fight against each other.

First, the CPU 201 refers to the player information stored in the RAM 203, and compares the levels of the player "P1" and the player "P2" (step S270). According to the player information shown in Fig. 20, the level of the player "P1" is 2, and the level of the player "P2" is 6. Consequently, the player "P1" is a player of higher level, and the player "P2" is a player of lower level. In addition, the different between both levels is 4.

Next, the CPU 201, based on the comparison result in step S270, determines whether or not the level of the player "P1" and the level of the player "P2" are the same (step S271). If levels are the same, the processing is transferred to step S274, but since the level of the player "P1" and the level of the player "P2" are different, the processing is transferred to step S272.

In step S272, the processing of resetting the timer corresponding to the player of higher level is performed. As a result, the timer value of the timer corresponding to the player of higher level is set to the initial value (value set in step S230 of the subroutine shown in Fig. 22). In the meantime, the timer corresponding to the player of lower level is continuously subtracted.

After executing the processing of step S272, the CPU 201 performs the processing of correcting the ability value of the player of lower level (step 273). In this processing, the CPU 201 executes the random number generation program stored in the ROM 202, and samples one random number among the range of predetermined numerical values (for example, 0 to 127). Then, based on the sampled random number and the level difference between the player "P1" and the player "P2", the CPU 201 refers to the ability value correction table stored in the ROM 202, and sets the ability value and the correction value which become correction objects.

Fig. 27 is a view showing one example of the ability value correction table stored in the ROM 202 of the outlet server 2.

The left most column is stored with three numerical value ranges (0 to 63, 64 to 95, and 96 to 127) as the random numerical values, and the right side column next to it, corresponding to each numerical value range, is stored the ability values which become correction objects. If the random numerical values are 0 to 63, the ability value which becomes the correction object is the attack hitting probability, and if the random numerical values are 64 to 95, the ability value which becomes the correction object is the critical hitting probability, and if the random numerical values are 96 to 127, the ability value which becomes the correction object is the attack evade rate.

Further, in the ability value correction table, each ability value which becomes the correction object is set with the correction value corresponding to the level difference of the player.

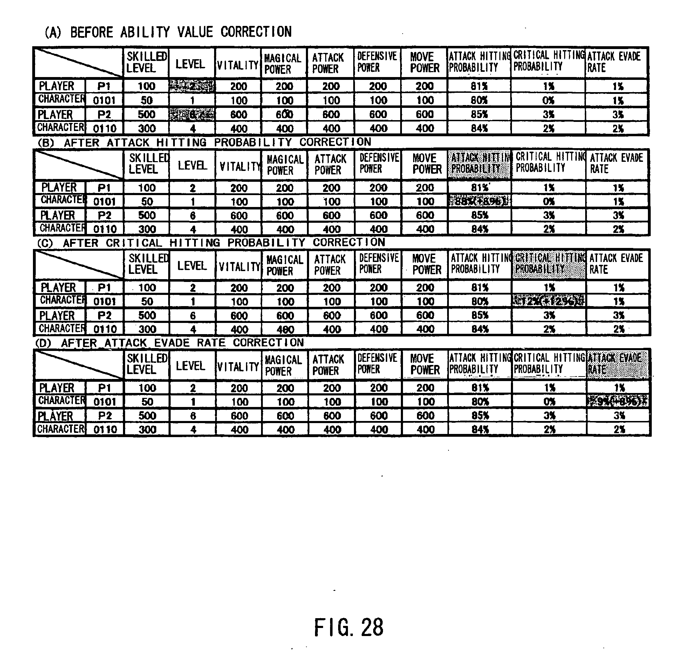

The processing in step S273 will be described by using Fig. 28.

Fig. 28 (A) shows the player information before the ability value correction, and Fig. 28 (B) to Fig. 28 (D) show the player information after the ability value correction.

As shown in Fig. 28 (A), the level of the player "P1" is 2, and the level of the player "P2" is 6. The difference of both levels is 4.

For example, in case the random number value sampled in step S273 is 0, if the ability value correction table shown in Fig. 27 is referred, the ability value which becomes the correction object is an attack hitting probability, and its correction value is +8%. If the ability value is corrected in this manner, the attack hitting probability of the character "0101" operated by the player "P1" is raised by 8% from 80% to 88%, and becomes higher than the attack hitting probability 84% of the character "0110" operated by the player "P2"(see Fig. 28(B)).

Further, in case the random number value sampled in step S273 is 64, if the ability value correction table shown in Fig. 27 is referred, the ability value which becomes the correction object is a critical hitting probability, and its correction value is +12%. If the ability value is corrected in this manner, the critical hitting probability of the character "0101" operated by the player "P1" is raised by 12% from 0% to 12%, and becomes higher than the attack hitting probability 2% of the character "0110" operated by the player "P2"(see Fig. 28(C)).

Further, in case the random number value sampled in step S273 is 96, if the ability value correction table shown in Fig. 27 is referred, the ability value which becomes the correction object is an attack evade rate, and its correction value is +8%. If the ability value is corrected in this manner, the attack evade rate of the character "0101" operated by the player "P1" is raised by 8% from 1% to 9%, and becomes higher than the attack evade rate 2% of the character "0110" operated by the player "P2"(see Fig. 28(D)).

In case it is determined that the levels of both players are the same in step S271 or the processing of step S273 is executed, the CPU 201 determines whether or not it is a timing in which the character makes a move (step S274). The timing by which the character makes a move is decided by the locomotive faculty of the character. Higher the locomotive faculty is, increased the frequency of making a move is.

In case it is determined that it is a timing in which the character makes a move, the CPU 201 executes a program stored in the ROM 202, thereby selecting the move of the character (step S275). As the move of the character, for example, an attack against another character, use of magic, flight from the fighting, and the like can be cited. Further, as a method of selecting the move of the character, there is no particular limitation imposed on it, and for example, it may be selected by lottery. Further, the selection may be made according to the proceeding state of the game, the ability value of the character, and the like such as use of the magic when there are a plenty of magical power, the attack against another character when there is few magical power, and the flight from the fighting when the vitality (life force) is far below the predetermined value.

Next, it is determined whether or not the attack against another character is selected as the move of the character (step S276). In case it is determined that the attack against another character is selected, the CPU 201 performs the hitting determination of the attack (step S277). In this processing, the CPU 201, based on the attack hitting probability and the critical hitting probability of the character as well as the attack evade rate of another character, determines whether or not the attack hits another character, and in case it is determined that the attack hits another character, the CPU 201, based on the attackpower of the character and the defensive power of another character, calculates damage suffered by another character.

After that, the CPU 201, based on the result of the hitting determination, renews the player information stored in the RAM 203 (step S278). Specifically, in case the attack hits another character, damage is given to another character, thereby reducing the vitality (life force) thereof.

In step S276, in case it is determined that the attack against another character is not selected, the CPU 201 determines whether or not the use of magic is selected (step S279).

In case it is determined that the use of magic is selected, the CPU 201, according to the function of the magic used, renews the player information stored in the RAM 203 (step S280). For example, in case the magic for attacking another character is used, the vitality (life force) of another character is reduced. Further, in case the magic for changing the ability value of the character is used, the ability value of the character is changed.

Next, the CPU 201 reduces the magical power of the character according to type of the magic used, and performs the processing of renewing the player information stored in the RAM 203 (step S281).

Next, the CPU 201 sets a recovery timer corresponding to the character reduced in the magical power to a predetermined region of the RAM 203 (step S282). The timer value of the recovery timer is reduced in order at predetermined time intervals after being set, and when the timer value becomes 0, the magical power of the character is recovered. In step S282, the CPU 201, based on the level difference between the character and another character, refers to the recover timer setting table stored in the ROM 202, and sets the timer value of the recovery timer.

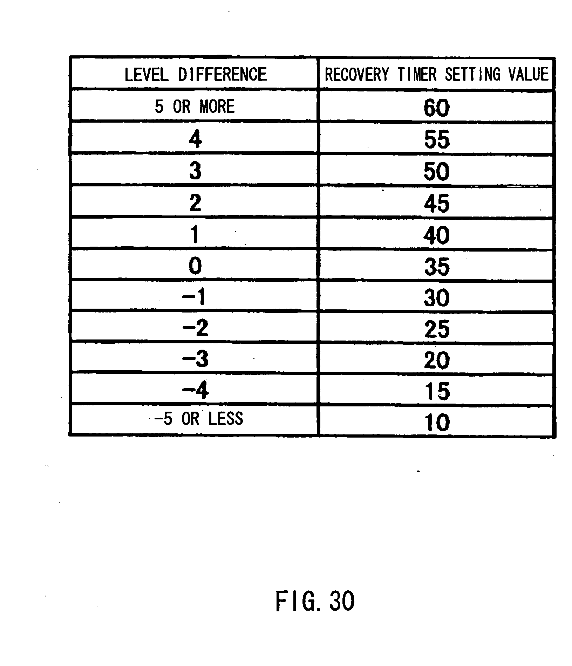

Fig. 30 is a view showing one example of the recovery timer setting table.

The left column is stored with the level difference of the player, and the right column next to it is associated with the recovery timer setting value for each level difference. For example, since the player "P1" is four points lower in level than the player "P2", the level difference is -4, and the recovery timer setting value is 15. In the meantime, since the player "P2" is four points higher in level than the player "P1", the level difference is 4, and the recovery timer setting value is 55.

In step S279, in case it is determined that the use of the magic is not selected, the CPU 201 performs various processings so that the character executes other selectedmoves (step S283). The CPU 201, according to the processing result, renews the player information stored in the RAM 203 (step S284).

In step S274, in case it is determined that it is not the timing n which the character makes a move or the processings of steps S278, S282 or S284 are executed, the CPU 201 transmits the display command for displaying a fighting image in the second display through the private line 5 by the communication interface circuit 204 (step S285).

This processing corresponds to the processings of steps S117 and S118 of the flowchart shown in Fig. 21. When the CPU 101 of the terminal 1 receives the display command by the communication interface circuit 104, it supplies the display command to the second depiction processing portion 112. The second depiction processing portion 112, according to the display command, performs a calculation, a light source computation process, and the like for converting the object (for example, the object constituting the ally character, the object constituting the enemy character, and the like) stored in the ROM 102 from the position on a three dimensional space to the position on a pseudo three dimensional space, and at the same time, based on the calculation result, performs a write processing (for example, a mapping and the like of the texture data for the region of the video RAM designated by polygon) of the image data to be depicted for the video RAM, thereby generating a fighting image and outputting it to the display 12. As a result, the second display 12 is displayed with the fighting image.

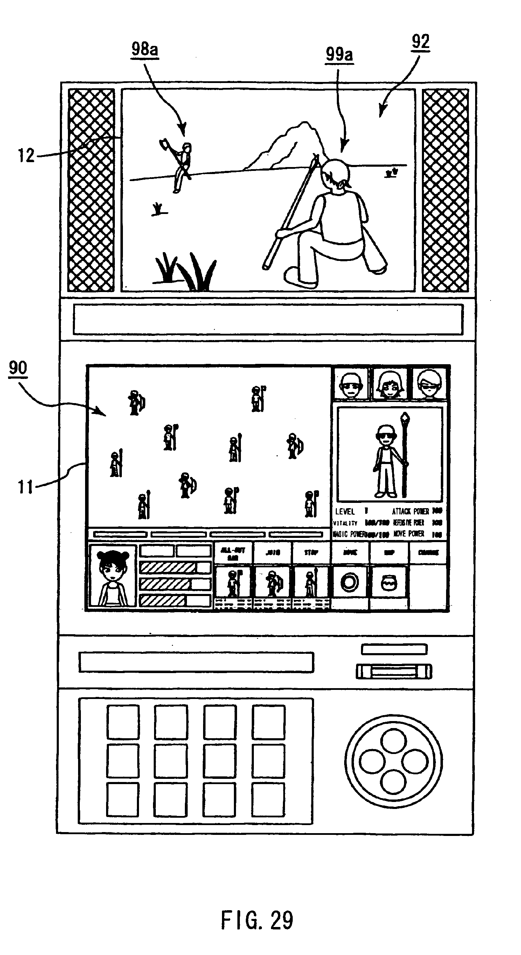

Fig. 29 is a view showing the game image displayed in the first display 11 and the fighting image displayed in the second display 12 of the terminal 1.

By the outlet server 2, the subroutine of the Fig. 26 is executed, and when the fighting between the characters is performed, as shown in Fig. 29, the first display 11 is displayed with the game image 90 including the play field image and the card images, and the second display is displayed with the fighting image 92 representing the fighting between the characters.

After executing the processing of step S285, the CPU 201 determines whether or not the recovery timer value is 0 (step S286). In case it is determined that the recovery timer value is 0, the magical power of the character is allowed to recover, and the player information stored in the RAM 203 is renewed (step S287). As described above, since the character operated by the player having a lower level is set smaller in the timer value of the recovery timer than the character operated by the player having a higher level, the recovery of the magical power is quickened.

In step S286, in case it is determined that the value of the recovery time is not 0 or the processing of step S287 is executed, the CPU 201 determines whether or not the fighting is completed (step S288). In this processing, the CPU 201 determines that the fighting is completed when the vitality (life force) of either character becomes 0 or either character escapes from the fighting.

In case it is determined that the fighting is not completed, the processing is returned to step S274. In the meantime, in case it is determined that the fighting is completed, the player information stored in the RAM 203 is renewed in such a manner that the skill level of the player or the character wining the fighting is increased (step S289), so that the present subroutine is completed.

The CPU 201 sets the character specific data in relation to the game result (here, the result of the fighting) for each character, and functions as the character specific data setting means stored in the RAM 303 (character specific data storage means) of the center server 3.

Further, when executing the subroutine shown in Fig. 22 or Fig. 25 or 26, the CPU 201 of the outlet server 2 functions as game control means for preceding the card game by using the ability value decided by the CPU 201, which functions as the ability value deciding means in step S212 of Fig. 16 or step S234 of Fig. 22.

As described above, according to the game system of the present embodiment, though the data (identifying information) owned by the character card 9 itself does not change, the game history (character specific data) of the games performed by using the character card 9 is stored in the RAM 303 (character specific data storage means) of the center server 3 as data. Next, when the game is played, the CPU 201 (ability value deciding means) of the outlet server 2, based on the historical data, refers to the ability value setting table stored by the ROM 202 (table storage means), and decides the ability value of the character (see Figs. 16 and 19, and 22), and therefore, according as skilled in the game, the ability value of the character corresponding to the card changes. In this manner, by separating the nature (for example, character and the like depicted on the card surface) owned by the character itself from the ability of the character corresponding to the character card, and while fixing the nature owned by the character card itself, by changing the ability of the character corresponding to the character card within the game according to the game history, the collection property of the card game and the fascinating aspect of the game itself can be made compatible.

Further, not only the identifying information read from the character card 9 (read object) by the character card reader 117 (reading means), but also the historical data (character specific data) from the RAM 303 (character specific data storage means) of the center server 3 based on the player identifying information acquired from the ID card reader 116 (acquiring means) are extracted, and based on that historical data, the character information (here, ability value of the character) used in the game is decided, and therefore, for example, even in case the character card 9 used in the game by the player P1 is used by the player other than the player P1, the same character information as the character information decided when the player P1 uses the character card 9 is not decided. That is, the character card 9 cannot be used in the same state as the player P1. Consequently, for example, a faulty play and the like of robbing the character card 9 of the skilled player of the game and preceding the game advantageously by using the character card 9 in the same state as the skilled player or the like can be prevented.

The character card in the present invention is not necessary in the shape of a card, and for example, may have a predetermined three-dimensional shape such as a ball, and may be of a mock-up in the similitude of the character shape or external appearance.

Further, in the present embodiment, a case has been described in which the CPU 201 of the outlet server 2 which functions as the character specific data setting means sets the historical data (character specific data) of the character or the player according to the fighting result at the fighting completion time, and renews (stores) the historical data in the RAM 303 of the center server 3 as the character specific data storage means at the game completing time, but in the present invention, for example, the historical data of the character or the player may be set according to the score and the like achieved by the character or the player in the game.

It is preferable that the game system of the present invention has the following constitution.

That is, the game system of the present invention preferably comprises: (1) assignment instruction input means (for example, the touch panel 14 and the like of the terminal 1 for inputting an instruction to the effect that a read object (for example, character card 9 and the like) W owned by a player X be assigned to a player Y according to the operation by the player X);
determining means for determining whether or not the player Y has the same type of the read object W' as the read object W owned by the player X by referring to the historical data (characterspecificdata) storedinthecharacterspecific data storage means (for example, the RAM 303 of the center server 3, the RAM 203 of the outlet server 2, and the like) based on the instruction inputted by the assignment instruction input means; and
first changing means (for example, the CPU 301 of the center server 3 or the CPU 201 of the outlet server 2, and the like) for changing the historical data (character specific data) of a character w' corresponding to a read object W' owned by the player Y stored in the character specific data storage means into the historical data (character specific data) of a character w corresponding to the read object W owned by the player X in case it is determined by the determining means that the player Y has the read object W'.

Since the player Y can play a game by using the character w' whose ability value is decided by the historical data (character specific data) of the character w used by the player X, an environment can be created, in which the players can mutually substantially exchange the read objects of the same types having different strength on a on-line game, thereby enhancing collection property of the card game.

Further, the game system having the constitution (1) preferably comprises:
exchange table storage means (for example, the ROM 302 of the center server 3 or the ROM 202 and the like of the outlet server 2) for storing an exchange table associated with the character historical data (character specific data) and the historical data (character specific data) of another character;
character specific data generating means (for example, the CPU 301 of the center server 3 or the CPU 201 of the outlet server 2, and the like) for referring to the exchange table and generating the historical data (character specific data) of a character z corresponding to another read object Z owned by the player Y based on the historical data (character specific data) of the character w corresponding to the read object W owned by the player X in case it is determined by the determining means that the player Y does not have the read object W'; and
second changing means (for example, the CPU 301 of the center server 3 or the CPU 201 of the outlet server 2, and the lie) for changing the historical data (character specific data) of the character z corresponding to the read object Z owned by the player Y stored in the character specific data storage means into the historical data (character specific data) generated by the character specific data generating means.

Since the player Y can perform the game by using the character z whose ability value is decided by the historical data (character specific data) of the character w used by the player X, an environment can be created, in which the players can mutually substantially exchange even the read objects of the different types on a on-line game, thereby dramatically enhancing collection property of the card game.

In the present embodiment, a case has been described in which the terminal 1 comprises the readingmeans (the character card reader 117), the outlet server 2 comprises the character specific data setting means (CPU 201), the ability value deciding means (CPU 201), and the game control means (CPU 201), and the center server 3 comprises the character specific data storage means (RAM 303) and the extracting means (CPU 301), but the present invention is not limited to this example, and for example, the RAM 203 of outlet server 2 may function as the character specific data storage means, and the CPU 201 of the outlet server 2 may function as the extracting means.

Further, in the present embodiment, a case has been described in which the outlet server 2 comprises the character specific data setting means (CPU 201), the ability value deciding means (CPU 201), and the game control means (CPU 201), and the center server 3 comprises the character specific data storage means (RAM 303) and the extracting means (CPU 301), but the server of the present invention, similarly to the present embodiment, may be a server comprising two devices or more than three devices mutually connected by the communication line. That is, the server of the present invention is not necessarily comprised of one device.

Further, in the present embodiment, a case has been described, in which the ROM 202 of the outlet server 2 stores the game control program which allows the outlet server 2 to function as the character specific data setting means, the ability value deciding means and the game control means, and the ROM 302 of the center sever 3 stores the game control program which allows the center server 3 to function as the character specific data storage means and the extracting means, but the game control program of the present invention, similarly to the present embodiment, may be executed by a plurality of devices which are split into a plurality and mutually connected by the communication line.

In the present embodiment, while a description has been made on the game system comprising a plurality of terminal 1, the outlet server 2 communicatably connected to a plurality of terminal 1 through the private line 5, and the center server 3 connected to a plurality of outlet servers 2 through the communication line 4, the present invention is not limited to this example. For example, a game system comprising a single game device (terminal), a game system comprised by a plurality of game devices (terminal) connected through the communication line, a game system comprised by a plurality of game devices (terminal) and the servers connected through the Internet, and the like can be also adapted to the present invention.

Next, another example of the game system according to the present invention will bb described.

The game system described here adopts not the character card but the action figure in the similitude of the character as the read object.

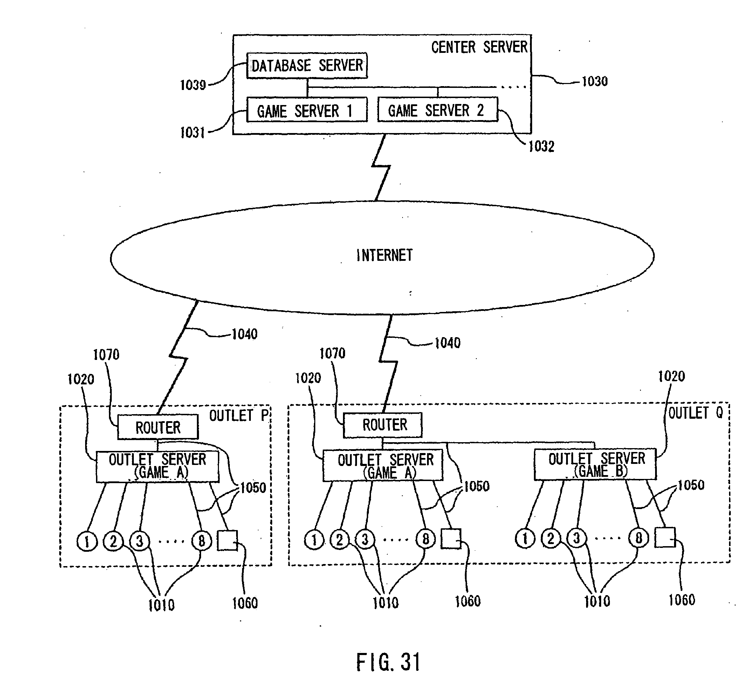

Fig. 31 is a structural drawing of another example of the game system according to the present invention.

The game system comprises: a plurality of terminal 1010; outlet servers 1020 communicatably connected to a plurality of terminal 1010 through a private line 1050; and center servers 1030 communicatably connected to a plurality of outlet servers 1020 through a communication line 1040, and further, comprises a card vending machine 1060 connected to the outlet servers 1020 through the private line 1050 one set each for every outlet. Incidentally, an outlet Q is provided with the outlet server 1020 for use of a game A and the outlet serer 1020 for use of a game B.

The center server 1030 comprises a database server 1039 and a plurality of game servers 1031, 1032, ...

The database server 1039 performs (1-1) a data control for every ID data given to each player, (1-2) a certification of the player at the game starting time, and (1-3) a transmission processing of the game data.

Specifically, as the (1-1), the database server 1039 performs, for example, a control (storage, setting, renewal, an the like) of an ID data given to each player, a password used at the certification time of the player, a type of the game played by the player, a game data, and the like. Further, the game data includes, for example, the preceding state of the game (character specific data and the like), the character operated by the player, the level and the ability value of the character, the increase and decrease value of the ability value, and the like.

Further, as the (1-2), the database server 1039 certifies the player, for example, by using the ID data and the password, Performs certifying the player, thereby permitting the player to participate in the game.

Further, as the (1-3), the database server 1039, for example, based on the ID data of the player and the data (identifying information) for identifying the character read from an action figure as the read object by an IC chip reader (not shown) as reading means of the terminal 1010, transmits the data of the character among the game data to the terminal 1.

However, in case it is after the second time that the player starts playing the game, even if the action figure is not used, it is possible to decide the game based on the ID data of the player, the input of the password by the operation of the player and the types of the game. Further, in case the action figure is not used, a predetermined limit can be set.

The game servers 1031, 1032 ... are set corresponding to every game executable in the game system according to the present embodiment. Incidentally, among these plural game servers, one set is the game server corresponding to the game according to the present embodiment.

The game servers 1031, 1032 ... (hereinafter referred to also as game server 1031 and the like) perform (2-1) a matching processing between the terminal 1010 installed in different outlets and (2-2) a traffic control relative to the transmission and reception of the data after the matching.

Specifically, as the (2-1), the game server 1031 and the like, when a certain player operates the terminal 1010 so as to participate in the game, determines whether or not another player participates in the game. Then, in case it is determined that another player participates in the game, the matching with the terminal 1010 operated by that player is performed. In the meantime, in case it is determined that another player does not participate in the game, a CPU player is set. In case the CPU player is set, the outlet server 1020 may be set as the CPU player, and the center server 1030 (for example, the game server 1031 and the like) maybe set as the CPU player.

Further, as the (2-2), the game server 1031 and the like perform (2-1) a traffic control relative to the transmission and reception of the data between the matched terminal 1 by the matching processing. For example, the game server 1031 and the like transmit the data received from the terminal 1 connected to the outlet server 1020 (for Game A) of the outlet P to the terminal 1 connected to the outlet server 1020 (for Game A) of the outlet Q. In this manner, the outlet server 1020 according to the present embodiment does not directly receive the data only from the center server 1030, nor directly performs the transmission and reception of the data between the outlet servers 1020.

The outlet server 1020 is connected to the center server 1030 trough a router 1070. The router 1070 has a predetermined touting table.

Similarly to the outlet Q shown in the figure, in case a plurality of outlet servers 1020 are installed in the same outlet, the router 1070, when received game data and the like from the center server 1030, refers to the routing table, and transmits the game data to the outlet server 1020 connected to the terminal 1010 of the transmission destination through the private line 1050.

Further, in case the transmission and reception of the data is performed between the terminal 1010 connected to a plurality of outlet servers 1020, respectively, which are installed in the same outlet, when the router 1070 receives the game data and the like from the terminal 1010 via the outlet server 1020, it refers to the routing table, and transmits the game data to the outlet server 1020 connected to the terminal 1010 of the transmitting destination through the private line 1050.

The outlet server 1020 performs (3-1) a traffic control relative to the transmission and reception of the data between the center server 1030 and the terminal 1010 or between the terminal 1010 connected to a plurality of outlet servers 1020 installed in the same outlet, respectively, and (3-2) downloading of the application to the terminal 1.

Specifically, as the (3-1), the outlet server 1020 performs a traffic control relative to the transmission and receipt of the game data and the like between the center server 1030 and the terminal 1010. However, in case the terminal 1010 of the transmitting destination is connected to the same outlet server 1020 or is connected to another outlet server 1020 installed in the same outlet, the game data and the like are not transmitted to the center server 1030, but are transmitted to the terminal 1010.

Further, as the (3-2), the outlet server 1020, in a timing in which a request signal to the effect that a downloading from the center server 1030 is requested is received from the terminal 1010, performs the downloading of the application to the terminal 1010. The application includes various data (for example, image data and the like) and the program relative to the game content, and a board program allocating the functions on the game to the input means (for example, a plurality of input switches and the like, not shown) provided in the terminal 1010. Further, the downloading of the application is not limited to the downloading from the outlet server 1020, but may be performed from the center server 1030.

The terminal 1010 is connected to the outlet server 1020 through the private line 1050. The terminal 1010 performs (4-1) the downloading of the application and (4-2) the proceeding of the game.

Specifically, as the (4-1), the terminal 1010, when the power is turned on, transmits a request signal to the effect that the application be downloaded to the outlet server 1020, and performs the downloading of the application. The downloaded application is stored in a temporarily storable region of the RAM and the like within the terminal 1010. Further, as the (4-2), the terminal 1010 uses the downloaded application and performs the proceeding of the game. The proceeding of the game is performed as follows. The terminal 1010 receives the data for every ID data given to each player from the database server 1039 at the game starting time. While the game proceeds, the data with the terminal 1010 and another terminal 1010 within the same game are transmitted and received via the center server 1030 through the outlet server 1020. However, in case another terminal 1 is connected to the same outlet server 1020 or is connected to another outlet server 1020 installed in the same outlet, the game data and the like are not transmitted to the center server 1030, but are transmitted to the terminal 1010. At the game completing time, the game data renewed during the game or the game result itself is transmitted to the database server 1039.

Incidentally, the proceeding of the game may be performed not by the terminal 1010, but by the outlet server 1020.

Acardvendingmachine 1060 can communicate with the center server 1030 through the outlet server 1020. The card vending machine 1060 receives the input operation of personal information performed by the player, and performs the sale of the ID card stored with the ID data. The ID card is used when starting the game, and the ID data is read by an ID card reader provided in the terminal 1010.

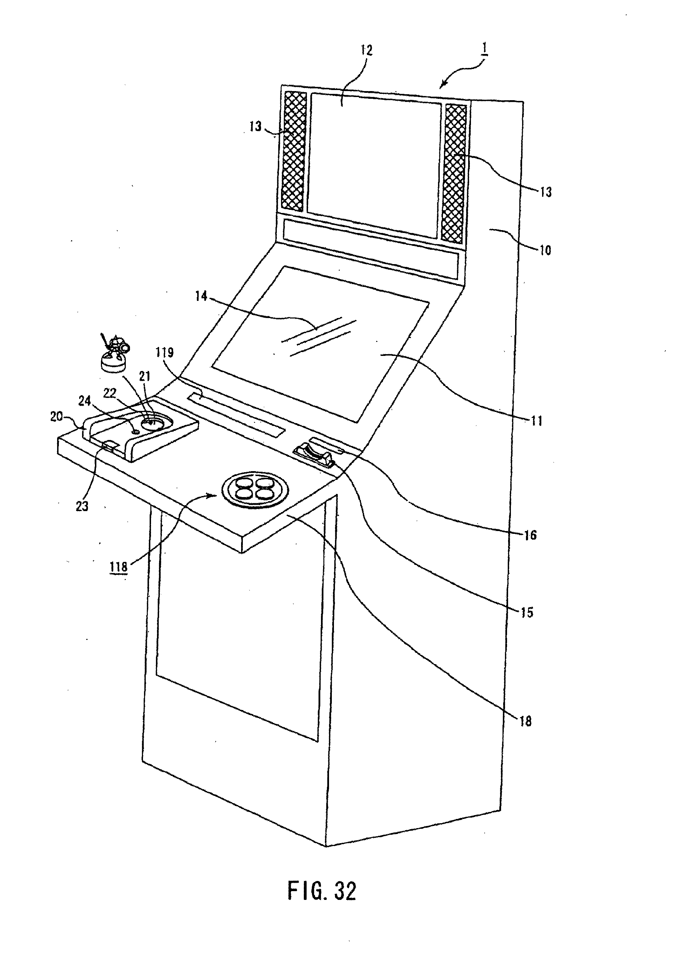

Fig. 32 is an oblique view showing the external appearance of the terminal in the present embodiment.

A case body 10 is provided with an control board 18 protruding in front, and on the upper surface of the control board 18, there is provided a certification apparatus 20 mountable with an action figure. The certification apparatus 20 may be available in a plurality.

In the upper part of the certification apparatus 20, there is a recessed area 21, on which an action figure 30 can be mounted. The recessed area 21 is shaped so that a pedestal of the action figure to be described later can be fitted without leaving a space. More than two thirds of the pedestal of the action figure can be fitted into the recessed area. Further, the recessed area is provided with a stopper 22, and is constructed such that the action figure is prevented from coming off, falling over or displacing, and is removable by operating a removing switch 23.

Further, within the certification apparatus 20, there is provided an IC chip reader (not shown), which can read information on the IC chip built-in the action figure 30, which is a read object. At this time, the IC chip reader functions as reading means for reading the identifying information owned by the action figure 30 from the IC chip built-in the action figure 30.

The certification apparatus 20 is provided with a LED 24, which flashes on and off while the IC chip reader certifies the data of the action figure 30. While in certification, the LED flushes on and off, and in addition, the recessed area 21 of the certification apparatus or the whole body 20 is brilliantly presented. The presentation is not particularly limited to brilliancy, but the certification apparatus 20 may perform a predetermined action (for example, vertical motion of the whole body of the certification apparatus 20).

Incidentally, the illustrated certification apparatus 20 shows minimum functions, and it is preferable that the design thereof is matched to the worldview of the game.

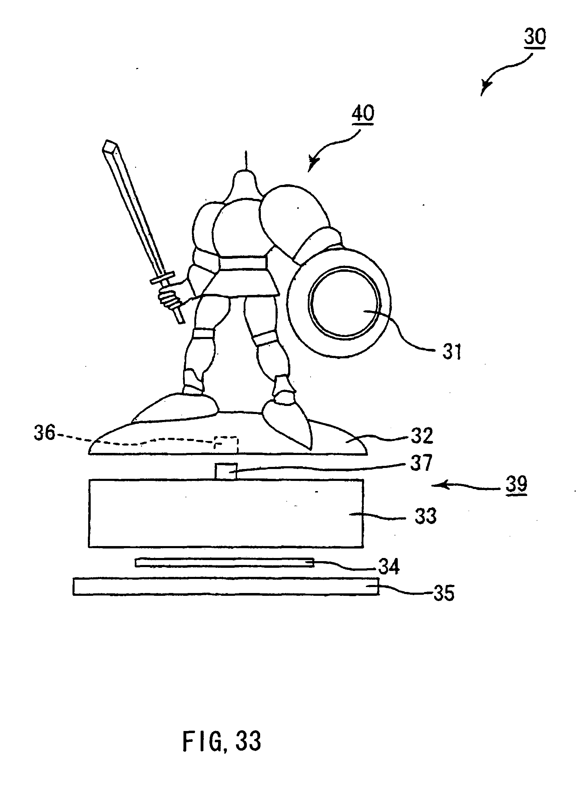

Fig. 33 shows an external appearance of the read object (action figure 30) according to another example of the game system.

The action figure 30 comprises a pedestal 39 and a action figure main body 40.

The pedestal 39 is cylindrical, and comprises a top lid 33, an IC chip 34, and a bottom lid 35. The IC chip 34 is nipped by the top lid 33 and the bottom lid 35, and is constituted such that it is not taken out. The IC chip 34 is stored with the ability value data and the like of the character represented in the action figure main body. The top lid 33 is provided with a protrusion 37. Further, the bottom lid 35 is designed to be slightly larger in its diameter than the top lid 33 so that the action figure can be fixed by the stopper 22.

The action figure main body 40 comprises a action figure main body 31 and a action figure main body base 32. The action figure main body base 32 is provided with a recessed area 36. The recessed area 36 and the protrusion 37 are for the purpose of preventing the displacement fromoccurringwhen the pedestal 39 and the action figure main body 40 are connected.

The action figure is stored in a capsule of approx 7 cm in diameter, and is sold by another vending machine identical to the card vending machine 1060. Naturally, the sales mode of the action figure is not particularly limited.

Incidentally, as the identifying information stored in the IC chip 34 within the action figure 30, there is not particularly any limit imposed on it, and for example, an unique number or a symbol assigned to every action figure 30, an unique number or a symbol allotted in association with the character displayed by the action figure 30, and the like can be cited.

The processing in the game system according to a second embodiment will be described.

(A) The CPU of terminal 1010 sets each character specific data (for example, skilllevel, personal effects, accessories, and the like of the character) in relation to the game result for each character, and stores it in the RAM of database server 1039 (character specific data storage means).

At this time, the CPU of the terminal 1010 functions as character specific data setting means.

(B) The CPU of the database server 1039 stores the character specific data set in (A) in the RAM of the database server 1039 in association with the identifying information of the action figure for every player.

The RAM of the database server 1039 functions as the character specific data storage means for storing the character specific data of the character in association with the identifying information for each character.

(C) The terminal 1010 comprises an ID card reader, and the CPU of the terminal 1010 acquires ID data (player identifying information) from an ID card by the ID card reader, and transmits the acquired ID data to the database server 1039. The ID card reader provided in the terminal 1010 functions as the acquiring means.

(D) The CPU of the terminal 1010 transmits the identifying information read from the action figure 30 by the IC chip reader of a certification apparatus 20 provided in the terminal 1010 to the database server 1039. The IC chip reader provided in the terminal 1010 functions as reading means.

(E) The CPU of the database server 1039, based on the ID data and the identifying information received from the terminal 1010 in (C) and (D), extracts the character specific data corresponding to the ID data and the identifying information from the RAM (character specific data storage means) of the database server 1039. In (F), the CPU of the database server 1039 functions as the extracting means.

(F) The CPU of the database server 1039, based on the character specific data extracted in (E), decides the character information. The character information includes the ability value of the character and the external appearance structure information relative to the external structure of the character.

Specifically, the ROM of the database server 1039 is stored in advance with an ability value setting table (see Fig. 19) associated with the skill lever of the character and the ability value of the character as the character specific data, and the CPU of the database server 1039, based on the skill level of the character, refers to the ability value setting table, and decides the ability value of the character as the character information.

Further, the ROM of the database server 1039 is stored in advance with an external appearance structure setting table (not shown) associated with the data relative to the personal effects and accessories of the character and the external appearance structure information of the character as the character specific data, and the CPU of the database server 1039, based on the data relative to the personal effects and accessories of the character, refers to the external appearance structure setting table, and decides the external appearance structure information of the character as the character information.

In (F), the CPU of the database server 1039 functions as the character information deciding means.

(G) The CPU of the database server 1039 transmits the character information (the ability value of the character and the external appearance structure information of the character) decided in (F) to the terminal 1010.

(H) The CPU of the terminal 1010 proceeds the game by using the character information (the ability value of the character and the external appearance structure information of the character) received from the database server 1039.

In (H), the CPU of the terminal 1010 functions as game control means for proceeding the game by using the character information decided in (F).

As described above, according to the game system of the present embodiment, though the data (identifying information) owned by the action figure 30 itself does not change, the game history (character specific data) in which the game is played by using the action figure 30 is stored in the RAM (character specific data storage means) of the database server 1039 as data, and next, when the game is played, the CPU (character information deciding means) of the database server 1039, based on the historical data, decides the ability value of the character, and therefore, according as skilled in the game, the ability value of the character corresponding to the action figure changes. In this manner, by separating the nature (for example, character and the like represented in the action figure) owned by the action figure itself from the ability of the character corresponding to the action figure, and while fixing the nature owned by the action figure itself, by changing the ability of the character corresponding to the action figure within the game according to the game history, the collection property of the action figure and the fascinating aspect of the game itself can be made compatible.

Further, not only the identifying information read from the action figure 30, but also the historical data (character specific data) from the RAM (character specific data storage means) of the database server 1039 based on the ID data (player identifying information) acquired from the ID card by the ID card reader are extracted, and based on that historical data, the character information (the ability value of the character and the external appearance structure information on the character) is decided, and therefore, for example, even in case the action figure 30 used in the game by the player A is used by the player other than the player A, the same character information as the character information decided when the player A uses the action figure 30 is not decided. That is, the action figure 30 cannot be used in the same state as the player P1. Consequently, for example, a faulty play and the like of robbing the action figure 30 of the skilled player of the game and proceeding the game advantageously by using the action figure 30 in the same state as the skilled player or the like can be prevented.

Further, in the present embodiment, a case has been described in which the CPU of the terminal 1010 which functions as the character specific data setting means sets the historical data (character specific data) of the character or the player according to the fighting result at the fighting completion time, and renews (stores) the historical data in the RAM of the database server 1039 as the character specific data storage means at the game completion time, but in the present invention, for example, the historical data of the character or the player may be set according to the score and the like achieved by the character or the player in the game.

Further, in the present embodiment, a case has been described in which the terminal 1010 comprises the character specific data setting means (CPU of the terminal 1010) and the game control means (CPU of the terminal 1010), and the database server 1039 comprises the character specific data storage means (RAM of the database server 1039), the character information deciding means (CPU of the database server 1039) and the extracting means (CPU of the database server 1039), but the server of the present invention may be a server comprising two devices or more than three devices mutually connected by the communication line. That is, the server of the present invention is not necessarily comprised of one device.

Further, in the present embodiment, a case has been described in which the ROM of the terminal 1010 stores the game control program which allows the terminal 1010 to function as the character specific data setting means and the game control means, and the ROM of the database server 1039 stores the game control program which allows the database server 1039 to function the character specific data storage means, the character information deciding means and the extracting mean, but the game control program of the present invention, similarly to the present embodiment, may be executed by a plurality of devices which are split into a plurality and mutually connected by the communication line.

In the present embodiment, while a description has been made on the game system comprising a plurality of terminal 1010, the outlet server 1020 communicatably connected to a plurality of terminal 1010 through the private line 1050, and the center server 1030 connected to a plurality of outlet servers 1020 through the router 1070 and the communication lien 1040, the present invention is not limited to this example. For example, a game system comprising a single game device (terminal), a game system comprised by a plurality of game devices (terminal) connected through the communication line, a game system comprised by a plurality of game devices (terminal) and the servers connected through the Internet, and the like can be also adapted to the present invention.

Additional advantages and modifications will readily occur to those skilled in the art. Therefore, the invention in its broader aspects is not limited to the specific details or representative embodiments shown and described herein. Accordingly, various modification may be made without departing from the spirit or scope of the general inventive concept as defined by the appended claims and their equivalents.

## Claims

1. A game system capable of executing a game using read objects portraying characters appearing on the game, each object having a piece of specific identifying information, comprising:
specific data storage means for storing character specific data of said characters for each character, each character specific data being associated with said identifying information;
character specific data setting means for setting each character specific data based on a game result, and storing the character specific data in said character specific data storage means;
reading means for reading the identifying information from said read object;
acquiring means for acquiring player identifying information for specifying a player;
extracting means for extracting the character specific data of the character corresponding to the read object from said character specific data storage means based on the player identifying information acquired by said acquiring means and the identifying information read by said reading means;
character information deciding means for deciding the character information used in the game based on the character specific data extracted by said extracting means; and
game control means for proceeding said game by using the character information decided by said character information deciding means.

2. A game system capable of executing a game using read objects portraying characters appearing on the game, each object having a piece of specific identifying information, comprising:
character specific data storage means for storing the character specific data defined on each character in association with said identifying information for each character;
character specific data setting means for setting each character specific data based on a game result and storing it into said character specific data storage means;
reading means for reading the specific identifying information of the read object from said read object;
extracting means for extracting the character specific data of the character corresponding to the read object from said character specific data storage means based on the identifying information read by said reading means;
ability value deciding means for deciding the ability value of the character based on the character specific data extracted by said extracting means; and
game control means for proceeding said game by using the ability value decided by said ability value deciding means.

3. The game system according to claim 1 or 2, wherein:
said read object is a character card corresponding to any one of the characters among plural types of characters appearing on the game.

4. The game system according to claim 1 or 2, wherein:
said read object is an action figure having a shape corresponding to any one of the characters among plural types of characters appearing on the game.

5. The game system according to claim 1 or 2, wherein:
said character information deciding means decide the external appearance structure information for the external appearance structure of the character.

6. A server connected to at least one set of terminal through a communication line, said server constituting a game system allowing a player to execute a game using read objects by using said terminal, said read objects portraying the characters appearing on the game, and each read object having a piece of specific identifying information, comprising:
character specific data storage means for storing each character specific data in association with said corresponding identifying information;
character specific data setting means for setting the character specific data based on a game result, and storing it into said character specific data storage means;
extracting means for extracting the character specific data of the character corresponding to the read object from said character specific data storage means based on the identifying information read from said read object by the reading means provided in each terminal;
ability value deciding means for deciding the ability value of the character based on the character specific data extracted by said extracting means; and
game control means for proceeding said game by using the ability value decided by said ability value deciding means.

7. The server according to claim 6, wherein:
said read object is a character card corresponding to any one of the characters among plural types of characters appearing on the game.

8. The server according to claim 6, wherein:
said read object is an action figure having a shape corresponding to any one of the characters among plural types of characters appearing on the game.

9. The server according to claim 6, wherein:
said character information deciding means decide the external appearance structure information for the external appearance structure of the character.
